(19) Europäisches Patentamt
European Patent Office
Office européen des brevets

(11) **EP 2 954 951 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **14172024.3**

(22) Anmeldetag: **11.06.2014**

(51) Internationale Patentklassifikation (IPC):
**B01J 37/08** *(2006.01)* **B01J 37/14** *(2006.01)*
**B01J 23/38** *(2006.01)* **B01J 23/42** *(2006.01)*
**B01J 35/00** *(2006.01)* **B01J 35/10** *(2006.01)*
**B01J 37/02** *(2006.01)* **H01M 4/92** *(2006.01)*

(52) Gemeinsame Patentklassifikation (CPC):
**C01B 32/20; B01J 23/38; B01J 23/42;**
**B01J 37/0018; B01J 37/06; B01J 37/084;**
**B01J 37/14; C01B 32/05; C01B 32/205;**
**C01B 32/21; H01M 4/926;** B01J 35/006;
B01J 35/1014; B01J 35/1019; B01J 35/1047;

(Forts.)

(54) **Trägerkatalysator sowie Verfahren zur Herstellung eines mit Metall-Nanopartikeln belegten, porösen graphitisierten Kohlenstoffmaterials**

Carrier catalyst and method for producing a porous graphitised carbon material coated with metal nanoparticles

Catalyseur sur support et procédé de fabrication d'un matériau de carbone graphité poreux, revêtu de nanoparticules métalliques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.12.2015 Patentblatt 2015/51**

(73) Patentinhaber: **Heraeus Deutschland GmbH & Co. KG**
**63450 Hanau (DE)**

(72) Erfinder:
• **Neumann, Christian**
**35410 Hungen (DE)**
• **Becker, Jörg**
**61194 Niddatal (DE)**
• **Pihan, Sascha**
**63743 Aschaffenburg (DE)**
• **Walter, Richard**
**63755 Alzenau (DE)**
• **Lässig, Walter**
**63571 Gelnhausen (DE)**
• **Eweiner, Florian**
**63452 Hanau (DE)**
• **Kiemel, Rainer**
**63505 Langenselbold (DE)**
• **Przibilla, Gabriele**
**63456 Hanau (DE)**
• **Breuer, Christian**
**64285 Darmstadt (DE)**
• **Neuschütz, Mark**
**64367 Mühltal (DE)**

(74) Vertreter: **Staudt, Armin Walter**
**Sandeldamm 24a**
**63450 Hanau (DE)**

(56) Entgegenhaltungen:
WO-A1-2013/117725     US-A1- 2013 209 891
US-B1- 6 780 350

(52)  Gemeinsame Patentklassifikation (CPC): (Forts.)
       B01J 35/1071; B01J 35/1076; B01J 35/108;
       B01J 35/1095; B01J 37/0203; Y02E 60/50

**Beschreibung**

Technisches Gebiet

Die vorliegende Erfindung betrifft ein Verfahren zur Herstellung eines mit Metall-Nanopartikeln belegten, porösen graphitisierten Kohlenstoffmaterials, insbesondere für elektrochemische Anwendungen, umfassend folgende Verfahrensschritte:

(a) Bereitstellen eines porösen Templatgerüsts aus anorganischem Templat-Werkstoff,

(b) Infiltrieren des porösen Templatgerüsts mit einer Kohlenstoff-Vorstufe,

(c) Thermische Behandlung der Kohlenstoff-Vorstufe, umfassend ein Carbonisieren der Kohlenstoff-Vorstufe bei einer Carbonisierungs-Temperatur,

(d) Entfernen des Templatgerüsts unter Bildung von templatmaterialfreiem, partikelförmigem porösen Kohlenstoffmaterial, und

(e) Belegen des templatmaterialfreien, partikelförmigen porösen Kohlenstoffmaterials mit einer katalytisch wirksamen Substanz.

Außerdem betrifft die Erfindung einen Trägerkatalysator enthaltend einen elektrisch leitfähigen, porösen Träger aus porösem graphitisiertem Kohlenstoffmaterial, beschichtet mit einer katalytisch wirksamen Substanz.

Bei Trägerkatalysatoren ist ein katalytisch wirksamer Werkstoff in hochdisperser Form auf der Oberfläche eines elektrisch leitfähigen Trägermaterials aufgebracht. Sie werden in einer Vielzahl unterschiedlicher technischer Gebiete eingesetzt, beispielsweise bei der Abgasreinigung, der Energiegewinnung oder in der chemischen Verfahrenstechnik zur Synthese oder Veränderung von Substanzen; insbesondere werden sie auch in Brennstoffzellen und anderen elektrochemischen Elementen und elektrochemischen Energiewandlern eingesetzt.

Brennstoffzellen sind galvanische Zellen, in denen die chemische Reaktionsenergie aus der Reaktion eines Brennstoffs und eines Oxidationsmittels galvanisch in elektrische Energie umgesetzt wird. Das bekannteste Beispiel ist die Wasserstoff/Sauerstoff-Brennstoffzelle.

Wegen ihrer hohen Energiedichte und Robustheit wird für den mobilen Einsatz zur Elektrotraktion von Kraftfahrzeugen die so genannte PEM-Brennstoffzelle (Polymer-Elektrolyt-Membran) bevorzugt. Sie besteht aus einer stapelweisen Anordnung von Membran-Elektrodeneinheiten MEA (Membrane Electrode Assembly), zwischen denen bipolare Platten zur Gaszufuhr und Stromableitung angeordnet sind.

Eine MEA besteht aus einer festen, protonenleitenden Membran (Polymerelektrolyt- oder Ionomer-Membran), die beidseitig mit Katalysator enthaltenden Reaktionsschichten versehen ist. Protonenleitende Polymermaterialien werden auch als "Ionomere" bezeichnet. Gebräuchlich sind Tetrafluorethylen-fluor-vinylethercopolymere mit Sulfonsäuregruppen, die beispielsweise unter dem Handelsnamen Nafion® der Firma DuPont erhältlich sind.

Bei der Wasserstoff-Sauerstoff-Brennstoffzelle dient eine der Reaktionsschichten der MEA als Anode für die Oxidation von Wasserstoff unter Bildung von Protonen, und die andere dient als Kathode für die Reduktion von Sauerstoff unter Bildung von Wasser.

Anode und Kathode enthalten aktive Komponenten zur katalytischen Unterstützung der jeweiligen Reaktion, bevorzugt Metalle und Edelmetalllegierungen der Platingruppe, die als feine Edelmetallpartikel auf einem Träger, bevorzugt aus porösem, graphitiertem Kohlenstoff, abgeschieden sind.

Auf diese Reaktionsschichten werden sogenannte Gasverteilerstrukturen oder Gasdiffusionsschichten aus Kohlefaserpapier, Kohlefasergewebe oder Kohlevlies aufgebracht, die einen guten Zugang der Reaktionsgase zu den Elektroden und die Ableitung des Zellenstroms gewährleisten.

Stand der Technik

Die im Einsatz auftretenden hohen Temperaturen und elektrischen Spannungen können eine Korrosion (Oxidation) des Trägers und damit einen Aktivitätsverlust verursachen. Dies gilt insbesondere für die Sauerstoff-Elektrode (Kathode) der Wasserstoff/Sauerstoff-Brennstoffzelle, deren Instabilität den Langzeiteinsatz derartiger Brennstoffzellen maßgeblich begrenzt. Zur Verbesserung der Korrosionsstabilität wird in der US 4,551,220 A empfohlen, die spezifische Oberfläche des Trägers aus Kohlenstoff durch eine zumindest teilweise Graphitisierung bis zu 20 % zu verringern. In der US 7,687,187 B2 wird dazu erläutert, dass ein noch höherer Graphitisierungsgrad zu einer weiteren Stabilisierung des Kohlenstoffträgers führt. Ein "hoher Graphitisierungsgrad" ist dabei durch einen Basalebenenabstand d002 von weniger als 0,338 nm definiert. Ein derartig hoher Graphitisierungsgrad ist aber selbst durch Aufheizen auf höchste Temperaturen um 2.800°C nicht mit jedem Kohlenstoff-Ausgangsmaterial erreichbar.

Im Hinblick auf eine hohe Effizienz des Katalysators soll trotz niedriger spezifischer Oberfläche des Kohlenstoffträgers die sogenannte elektrochemische Oberfläche ECA (Electro Chemical Area) des Verbundmaterials möglichst groß sein. Im Hinblick hierauf lehrt die EP 0 450 849 B1 auf einem leitfähigen Kohlenstoffträger aus "carbon blacks" or "acetylene blacks" eine Platinlegierung aus basischer Lösung abzuscheiden. Als Legierungspartner für Platin werden Cr, Mn, Co oder Ni mit einem Anteil zwischen 35 - 65 % vorgeschlagen. Nach einer reduzierenden Wärmebehandlung zeigt das Verbundmaterial eine ECA von mehr als 40 $m^2$/g.

Das aus der US 6,967,183 B2 bekannte Trägermaterial aus graphitischem Kohlenstoff besteht aus Partikeln mit einer mittleren Größe im Bereich zwischen 10 bis 100 nm. Es ist mit Platinteilchen mit einem Durchmesser von maximal 20 nm belegt. Das elektrokatalytische Pulver weist eine spezifische Oberfläche von mindestens 90 $m^2$/g auf.

Grundsätzlich können die katalytische Aktivität und die erreichbaren Zellspannungen durch eine homogene Dispersion von Platin-Nanopartikeln mit möglichst kleinen interpartikulären Abständen kleiner der Debyelänge des EDL (Electrical Double Layer) erhöht werden (Nature Materials, Vol. 12, October 2013, S. 919).

Die EP 0 676 050 B1 schlägt einen Trägerkatalysator vor, bei dem als Trägermaterial Farbstoff-Nadelkristalle (Perylen Rot-Nanowhisker) mit Strukturgrößen bis 50 nm eingesetzt werden, die mit nanoskaligen Katalysatorpartikeln aus Platin belegt sind. Diese Trägerpartikel zeigen bei hohen Stromdichten hervorragende Eigenschaften, unterliegen bei Teillast jedoch schwerer Degradation aufgrund entstehender Wasserprodukte, die bevorzugt die kleinen Poren durch Kondensation und Aufquellen des polymeren Ionomers verschließen und somit die aktive Oberfläche des Katalysatorträgers deutlich verringern.

Zur Verringerung dieses Effekts wird versucht, die Hydrophilität der Oberflächen durch Hinzufügen hydrophiler Komponenten zu verändern (US 7,144,652 B2) oder durch Zugabe von Kohlenstoffadditiven (US 7,687,187 B2) eine Katalysatorschicht mit räumlich inhomogenen Eigenschaften zu erzeugen.

Andere bekannte Methoden zur Herstellung von elektrokatalytischem Kohlenstoffpulver mit definierter Mikrostruktur und Morphologie beruhen auf Templat-Routen. Bei dem aus der US 7,488,699 B2 bekannten Katalysator für Methanol-Brennstoffzellen wird der Träger aus mesoporösem Kohlenstoff in einem Templatverfahren hergestellt, bei dem das Templatmaterial aus Quarzglas besteht, das mittels einer Sol-Gel-Methode erzeugt wird. Zur Herstellung des Kohlenstoffpulvers wird ein gelöstes Kohlenstoff-Vormaterial in das Templat eingebracht und getrocknet; das erhaltene Zwischenprodukt wird zu Pulver gemahlen und bei 900 °C Carbonisiert. Das Quarzglas-Templat wird mittels HF entfernt.

Zur Herstellung des Katalysators wird das so erzeugte Kohlenstoffpulver mit einer wässrigen Lösung von $Ru(NO)(NO_3)_3$ behandelt und getrocknet. Als alternatives katalytisches Material wird Platin genannt.

Ein Verfahren der eingangs genannten Gattung ist aus der WO 2013/117725 A1 bekannt. Zur Herstellung eines Trägerkatalysators für elektrochemische Anwendungen werden mesoporöse graphitisierte Teilchen mit Hohlkugelstruktur eingesetzt. Die Hohlkugeln weisen eine mesoporöse graphitische Hülle auf, die zwischen 20 bis 50 nm dick ist. Sie sind mit einem katalytisch wirksamen Material belegt.

Die graphitisierten Teilchen werden mittels eines Templatverfahrens erzeugt. Das $SiO_2$-Templat wird durch nasschemische Umsetzung einer hydrolysierbaren Siliciumverbindung in Gegenwart eines Schaumbildungsmittels, bevorzugt einer organischen Siliciumverbindung wie einem Alkylsilan hergestellt. Das Schaumbildungsmittel setzt beim anschließenden Kalzinieren Gase frei und erzeugt dadurch gewünschte Nanoporen im Templatmaterial.

Das so erhaltene mesoporöse $SiO_2$- Templatgerüst wird mit einer Lösung eines eisenhaltigen Metallsalzes behandelt, das als Graphitisierungskatalysator dient. Nach Entfernen des Lösungsmittels wird der verbleibende Porenraum mit einer graphitisierbaren organischen Verbindung, vorzugsweise in Lösung mit einem radikalisch polymerisierbaren Kohlenwasserstoff-Monomer wie Divinylbenzen oder mesophasigem Pech, imprägniert. Die so erhaltenen Verbundteilchen werden einem Hochtemperatur-Graphitisierungsschritt bei mehr als 1.000 °C unterworfen. Dabei bilden sich eisenhaltige Metallpartikel, auf denen sich graphitische Domänen niederschlagen, so dass ein graphitisches Gerüst innerhalb des porösen $SiO_2$-Templatgerüsts erhalten wird.

Das Templatmaterial und das eisenhaltige Metall werden anschließend entfernt, so dass ein mesoporöses graphitisches Gerüst in Form von Kohlenstoff-Hohlpartikel (sogenannter HGS-Teilchen; Hollow-Graphitic-Spheres) erhalten wird. Diese porösen Kohlenstoff-Hohlpartikel haben Durchmesser im Bereich von 60 bis 440 nm mit Wandstärken zwischen 20 und 50 nm, und sie zeigen eine biomodale Porengrößenverteilung mit einem ausgeprägten Maximum im Bereich von 2 bis 6 nm und einen kleineren Maximum im Bereich von 6 bis 20 nm ; ihre BET-Oberfläche liegt im Bereich von 1.200 bis 1.500 $m^2$/g.

Sie werden mit einer vorzugsweise alkoholischen Lösung einer katalytisch wirksamen Verbindung eines Edelmetalls, wie Platin, Rhodium, Palladium, Ruthenium oder Mischungen davon getränkt und einem Hydrierungsschritt (Tempern unter Wasserstoffatmosphäre bei 200 - 400 °C) unterzogen, so dass auf den Oberflächen der Kohlenstoff-Hohlpartikel sinterstabile Edelmetall-Nanoteilchen im Grö-ßenbereich um 3 nm ausfallen. Die Metallbeladung liegt typischerweise bei 20 Gew.-%, bezogen auf das Gesamtgewicht der metallbeladenen Kohlenstoff-Hohlpartikel. Zwecks Erhöhung der Temperaturstabilität ist abschließend eine Kalzinierung bei 600 bis 1.000 °C vorgesehen.

Die Graphitisierung in Gegenwart des oxidhaltigen Templatmaterials $SiO_2$ verlangt eine vergleichsweise niedrige Graphitisierungs-Temperatur, da es sonst zum Abbrand des Kohlenstoffs und zur Bildung von SiC kommt, was die dünnen Wandungen der Kohlenstoff-Hohlpartikel zerstören könnte. Die vergleichsweise niedrige Graphitisierungs-Temperatur trägt dazu bei, dass die porösen Kohlenstoff-Hohlpartikel eine große spezifische Oberfläche (BET) haben, die eine hohe Beladbarkeit mit katalytisch wirksamer Substanz und damit eine hohe Kapazität ermöglicht. Andererseits geht eine niedrige Graphitisierungs-Temperatur zu Lasten des Graphitisierungsgrades, was sich auf die Korrosionsbeständigkeit insbesondere gegenüber der Sauerstoff-Reduktionsreaktion einer Brennstoffzelle ungünstig auswirken kann.

Die US 2013/0209891 A1 befasst sich mit der Herstellung eines porösen Kohlenstofferzeugnisses mittels Templat-Verfahren mit den Verfahrensschritten: (a) Bereitstellen einer porösen Kohlenstoffstruktur, (b) Infiltrieren der Kohlenstoffstruktur mit einer Vorläufersubstanz für graphitisierbaren Kohlenstoff und (c) Carbonisieren der Vorläufersubstanz, wobei das Bereitstellen der porösen Kohlenstoffstruktur umfasst: (I): Bereitstellen eines porösen Templats, (II): Infiltrieren der Poren des Templats mit einer Lösung, die eine Vorstufe für nicht graphitisierbaren Kohlenstoff enthält, (III): Carbonisieren der Vorstufe unter Bildung der Kohlenstoffstruktur, und (IV): Entfernen des Templats. Durch den (unüblichen) Einsatz von nichtgraphitisierbarem Kohlenstoff wird zunächst eine poröse Kohlenstoffschicht mit hoher Oberfläche erzeugt, die nach dem Entfernen des Templatmaterials als Grundgerüst für die nachfolgende Infiltration mit graphitisierbarem Kohlenstoff dient. Dies vereinfacht die Herstellung dicker Kohlenstoffschichten mit einer Core-Shell-Struktur. Das Carbonisieren erfolgt jeweils bei einer Temperatur von 700 °C.

Die US 6,780,350 B1 beschreibt Kompositpulver aus Kohlenstoff und Metall. Die Pulverteilchen werden durch Erhitzen eines Aerosols erzeugt, das Vorläufersubstanzen für Metall und Kohlenstoff enthält. Platin-Oxalat wird als Vorläufersubstanz für Platin genannt.

## Technische Aufgabenstellung

Das Design eines gleichzeitig korrosionsstabilen und effizienten Trägerkatalysators, insbesondere für PEM-Brennstoffzellen, stellt eine große Herausforderung dar. Folgende Anforderungen sind dabei zu erfüllen:

1. Um eine möglichst hohe katalytische Effizienz zu erzielen - möglichst hohe katalytische Aktivität mit möglichst geringem Edelmetalleinsatz - soll das katalytisch wirkende Edelmetall eine große aktive Oberfläche bereitstellen und deshalb möglichst homogen und feinteilig, ohne Agglomeratbildung auf dem Katalysatorträger abgeschieden werden. Gleichzeitig soll es aber auch möglichst elektrolyseresistent an dem Trägermaterial fixiert sein.

2. Die Porenstruktur des Katalysatorträgers soll einen effektiven Transport der an der jeweiligen Reaktion beteiligen Komponenten - wie etwa Protonen und Sauerstoff bei der Brennstoffzelle - an die Katalysatorschichten ermöglichen und die Reaktionsprodukte - wie etwa Wasser - effektiv abführen.

Wenn alle diese Bedingungen erfüllt sind, ist es möglich, den Anteil der Edelmetallbeladung auf einem für kommerzielle Produkte notwendigen niedrigen Niveau von weniger als etwa 0,2 mg/cm$^2$ zu halten. Keine der bekannten Trägerkatalysatoren erfüllt alle diese Bedingungen gleichzeitig. Es ist somit Aufgabe der Erfindung, einen Trägerkatalysator bereitzustellen, der die oben genannten Bedingungen erfüllt.

Weiterhin liegt der Erfindung die Aufgabe zugrunde, ein Verfahren anzugeben, das die Herstellung eines derartigen Trägerkatalysators ermöglicht.

## Allgemeine Beschreibung der Erfindung

Hinsichtlich des Verfahrens wird diese Aufgabe ausgehend von einem Verfahren der eingangs genannten Gattung erfindungsgemäß dadurch gelöst,

- dass das nach Verfahrensschritt (c) erhaltene, templatmaterialfreie, partikelförmige poröse Kohlenstoffmaterial bei einer Graphitisierungs-Temperatur, die im Bereich von bis 1.400-2.500°C liegt und die höher ist als die Carbonisierungs-Temperatur, zu graphitisiertem, partikelförmigem, porösem Kohlenstoffmaterial graphitisiert wird,

- dass das graphitisierte Kohlenstoffmaterial einer Aktivierungsbehandlung in oxidierend wirkender Atmosphäre unterzogen wird,

- wobei das graphitisierte Kohlenstoffmaterial eine hierarchische Porenstruktur mit einem - mittels Quecksilber-Porosimetermessung ermittelten - Porenvolumen von mindestens 0,5 cm$^3$/g aufweist, wobei mindestens 75% des Porenvolumens auf Makroporen im Größenbereich von 100 bis 5.000 nm entfallen, und

- dass das Bereitstellen des Templatgerüsts in Verfahrensschritt (a) eine Maßnahme umfasst, bei der aus einem Ausgangsmaterial durch Flammhydrolyse oder Pyrolyse poröse Partikel aus dem anorganischen Templat-Werkstoff erzeugt, und diese aus der Gasphase unter Bildung des Templatgerüst abgeschieden werden.

Das erfindungsgemäße Verfahren dient der Herstellung von porösem Kohlenstoffmaterial, das mit katalytisch wirksamer Substanz belegt ist. Der nach dem Verfahren erhaltene Trägerkatalysator ist zum Einsatz in einer Vielzahl unterschiedlicher technischer Gebiete geeignet, wie eingangs bereits erläutert. Das erfindungsgemäße Verfahren wird im Folgenden in erster Linie im Hinblick und am Beispiel einer elektrochemischen Anwendung des Trägerkatalysators - und hierbei insbesondere für die Anwendung als Elektrodenmaterial in einer Brennstoffzelle - erläutert, jedoch ohne dass dadurch die Erfindung auf diesen Einsatz beschränkt sein soll.

Das Kristallgefüge von Graphit zeichnet sich durch übereinanderliegende, parallele Schichten (Graphitschichten oder Basalebenen) aus, in denen jeweils Kohlenstoffatome in hexagonaler Struktur angeordnet sind. Bei ungeordneten Kohlenstoff-Modifikationen finden sich Abweichungen in der Parallel-Anordnung der Graphitschichten und/oder in der ideal hexagonalen Struktur. Durch Tempern bei hoher Temperatur unter Sauerstoffausschluss kann der Anteil der ideal hexagonalen Kristallstruktur erhöht werden. Dieser Tempervorgang wird als "Graphitisierung" bezeichnet.

Beim gattungsgemäßen Verfahren erfolgen Carbonisieren und Graphitisierung der Kohlenstoff-Vorstufe im Rahmen ein und derselben thermischen Behandlung (Verfahrensschritt (c)). Dabei wird die Kohlenstoff-Vorstufe der Graphitisierungs-Temperatur unterzogen - der höchsten Temperatur im Fertigungsprozess - und dadurch in Kohlenstoff umgewandelt und gleichzeitig in die ideal hexagonale, graphitische Struktur gebracht. Erst nach dieser thermischen Behandlung wird das Templatgerüst entfernt.

Im Unterschied dazu sind beim erfindungsgemäßen Verfahren das Carbonisieren der Kohlenstoff-Vorstufe und das anschließende Graphitisieren getrennte Verfahrensschritte, wobei das Templatgerüst zwischen den beiden Behandlungsstufen entfernt wird. Die Behandlungstemperatur beim Carbonisieren ist niedriger als beim Graphitisieren. Zwischen den Hochtemperaturschritten wird das Templatmaterial entfernt. Dadurch, dass das Templatgerüst vor dem Graphitisieren entfernt wird, wird auch bei hoher Graphitisierungs-Temperatur eine chemische Reaktion des Werkstoffs des Templatgerüsts mit dem bei der hohen Graphitisierungs-Temperatur stark reduzierend wirkenden Kohlenstoff vermieden. So ist gewährleistet, dass ein hoher Graphitisierungsgrad eingestellt werden kann.

Beim Carbonisieren wird die Kohlenstoff-Vorstufe bei einer Carbonisierungs-Temperatur unter Sauerstoff-Ausschluss verkohlt. Ergebnis des Carbonisierungs-Prozesses ist ein poröses Kohlenstoffmaterial, das auf dem Templatgerüst abgelagert ist.

Das Templatgerüst wird entfernt, beispielsweise durch chemische Auflösung. Durch das Entfernen wird das vorher von Templatmaterial besetzte Volumen frei und stellt danach im porösen Kohlenstoffmaterial zusätzliche Hohlräume dar, die dreidimensional miteinander vernetzt sind. Diese Hohlräume werden im Folgenden auch als "Extemplat-Poren" bezeichnet und haben typischerweise Größen im Makroporenbereich.

Das nach dem Entfernen verbleibende poröse Kohlenstoffmaterial weist somit die ursprünglich vorhandenen Poren sowie die zusätzlichen Extemplat-Poren auf.

Porengrößen - definiert als Abstand gegenüberliegender Porenwandungen - im Nanometerbereich werden im Allgemeinen in drei Kategorien unterteilt: Mikroporen (<2 nm), Mesoporen (2 - 50 nm) und Makroporen (> 50 nm).

Das nach dem Carbonisieren erhaltene partikelförmige Kohlenstoffmaterial kann bedingt durch vorherige Fertigungsschritte bereits eine Partikelgröße haben, die an dessen spezifischen Einsatz angepasst ist, zum Beispiel an den Einsatz als Elektrodenmaterial für eine Brennstoffzelle. Andernfalls wird die Partikelgröße vor dem Graphitisieren des Kohlenstoffmaterials entsprechend eingestellt. Dabei wird das Kohlenstoffmaterial zerkleinert, vorzugsweise durch Mahlen, und bevorzugt zu Partikeln mit einer Partikelgröße von weniger als 20 $\mu m$, besonderes bevorzugt auf weniger als 10 $\mu m$. Dieses Einstellen der Partikelgröße kann vor oder nach dem Entfernen des Templatgerüsts erfolgen,

Die geringe mittlere Partikelgröße von weniger al 20 $\mu m$, vorzugsweise weniger als 10 $\mu m$, erweist sich insbesondere für die Herstellung besonders dünner Katalysatorschichten als vorteilhaft.

Zur Graphitisierung wird das partikelförmige poröse, templatmaterialfreie Kohlenstoffmaterial auf die Graphitisierungs-Temperatur erhitzt. Beim Graphitisieren verschwinden Mikroporen, Mesoporen ordnen sich um, wohingegen sich Makroporen wenig verändern. Ergebnis dieses Vorgangs ist graphitisiertes partikelförmiges, poröses Kohlenstoffmaterial mit hohem Anteil an dreidimensional miteinander vernetzten Makroporen. Diese tragen zur Aufnahmekapazität für die katalytisch wirksame Substanz und zur Verbesserung der Zugänglichkeit durch den Elektrolyten für guten Protonentransport zu den homogen dispergierten, katalytisch wirksamen Nanopartikeln bei, so dass Protonen und Sauerstoff effektiv an die Katalysatorschichten heran- und das entstehende Wasser effektiv abgeführt werden kann .

Dieses besteht aus polykristallinem Kohlenstoff mit einem hohen Graphitisierungsgrad. Der hohe Graphitisierungsgrad ist durch einen Abstand d002 der Graphit-Basalebenen von weniger als 0,338 nm (entspricht: 338 pm) definiert. Dieser Abstand wird röntgenographisch anhand der Beugungslinie der (002)-Ebene des graphitisierten Kohlenstoffmaterials bestimmt. Ein geringer Abstand ist gleichbedeutend mit einem hohen Graphitisierungsgrad und trägt zu einer hohen Korrosionsbeständigkeit des Kohlenstoffmaterials bei, insbesondere bei einem Einsatz des Kohlenstoffmaterials als Elektrode einer Brennstoffzelle auf Seiten der Sauerstoff-Reduktionsreaktion.

Auch in der Literatur wird der Basalebenenabstand d002 (der Abstand direkt benachbarter hexagonaler Ebenen in Richtung der kristallographischen c-Achse) als maßgeblicher Parameter für den Graphitisierungsgrad angesehen. Für eine quantitative Angabe des Graphitisierungsgrades g wird folgende Berechnungsformel vorgeschlagen:

$$g = (344pm-d002)/(344pm-335.4pm) \tag{1}$$

Angabe des Basalebenenabstandes d002 in pm (Picometer),

der Wert "344pm" entspricht dabei dem halben c-Ebenenabstand von völlig ungraphitisiertem Material, und der Wert "335.4pm" dem halben c-Ebenenabstand von hochgeordnetem Graphit.

Für den Basalebenenabstand d002 von 338 pm ergibt sich aus der Berechnungsformel (1) ein Graphitisierungsgrad von 69,67%.

Wegen dünner Wandungen und der Porosität des partikelförmigen Kohlenstoff-Ausgangsmaterials genügt beim erfindungsgemäßen Verfahren für die Erzeugung des hohen Graphitisierungsgrades eine vergleichsweise niedrige Graphitisierungs-Temperatur, die im Bereich von bis 1.400-2.500°C und besonders bevorzugt im Temperaturbereich von 2.300-2.500°C liegt.

Das graphitähnliche Schichtgefüge zeigt eine vergleichsweise hohe elektrische Leitfähigkeit und eine hohe Korrosionsbeständigkeit. Dies kann möglicherweise darauf zurückgeführt werden, dass infolge der erleichterten Graphitisierung die Enden der Basalebenen ähnlich wie bei Glaskohlenstoff verglasen und sich so teilweise verschließen.

Das poröse graphitisierte Kohlenstoffmaterial besteht aus polykristallinem, das heißt, Kristallite oder Graphit-Domänen aufweisendem Kohlenstoff. Die Korngrenzen stellen gestörte und daher reaktive Zonen im Vergleich zum ungestörten Kristall dar.

Daher wird das graphitisierte partikelförmige poröse Kohlenstoffmaterial anschließend einer Aktivierungsbehandlung in oxidierend wirkender Atmosphäre unterzogen, bevorzugt bei erhöhter Temperatur zwischen 400 und 500 °C und in einer Sauerstoff-haltigen Atmosphäre, wie beispielsweise an Luft. Dadurch wird das graphitisierte Kohlenstoffmaterial strukturselektiv an den Korngrenzen aktiviert, wobei vorwiegend an den Kristallit-Korngrenzen reaktive Oberflächengruppen entstehen, an denen sich Katalysator oder Katalysatorvorstufen der späteren Belegung bevorzugt ablagern und sich dort anreichern.

Die dadurch erzeugte große aktive Oberfläche trägt dazu bei, dass katalytisch wirksame Substanz möglichst homogen und feinteilig und ohne Agglomeratbildung auf dem Katalysatorträger abgeschieden und an dem Trägermaterial fixiert werden kann.

Das danach erhaltene graphitisierte partikelförmige, poröse Kohlenstoffmaterial zeigt eine hierarchischer Porenstruktur mit einem Porenvolumen von mindestens 0,5 cm$^3$/g, wobei mindestens 75% des Porenvolumens auf Makroporen im Grö-ßenbereich von 100 bis 5.000 nm entfallen.

Die hierarchische Porosität des Kohlenstoffmaterials zeigt sich darin, dass das entfernte Templatmaterial Hohlräume im Mesoporen- und Makroporenbereich hinterlassen hat, die dreidimensional miteinander vernetzt sind. Die diesen vernetzten Hohlraum umgebende Kohlenstoffablagerung besteht vorwiegend aus niedrigporösem, graphitisiertem Kohlenstoff, dessen Porenraum mit den Hohlräumen im Mesoporen- und Makroporenbereich verbunden und von diesem aus zugänglich ist. Die hierarchische Porosität zeichnet sich somit dadurch aus, dass Extemplat-poren eine dreidimensionale Hohlraumstruktur für den Transport von Substanzen zu und von den Poren des niedrigporösen, graphitisierten Kohlenstoffs darstellen.

Der hohe Anteil relativ großer Makroporen im Kohlenstoffmaterial trägt zur Aufnahmekapazität für die katalytisch wirksame Substanz und zur Verbesserung der Zugänglichkeit durch den Elektrolyten für guten Protonentransport zu den homogen dispergierten, katalytisch wirksamen Nanopartikeln bei, so dass Protonen und Sauerstoff effektiv an die Katalysatorschichten heran- und das entstehende Wasser effektiv abgeführt werden kann.

Das Bereitstellen des Templatgerüsts in Verfahrensschritt (a) umfasst eine Maßnahme, bei der aus einem Ausgangsmaterial durch Flammhydrolyse oder Pyrolyse poröse Partikel aus dem anorganischen Templat-Werkstoff erzeugt, und diese aus der Gasphase unter Bildung des Templatgerüst abgeschieden werden.

Mittels derartiger Plasma- oder CVD-Sootabscheideverfahren, die beispielsweise unter den Bezeichnungen OVD- oder VAD-Verfahren bekannt sind, werden im industriellen Maßstab synthetisches Quarzglas, Zinnoxid, Titanoxid, Titannitrid und andere synthetische Werkstoffe hergestellt.

Synthetisches $SiO_2$ ist mittels Sootabscheideverfahren unter Einsatz preiswerter Ausgangssubstanzen im industriellen Maßstab relativ kostengünstig herstellbar. Das $SiO_2$-Templat hält hohen Temperaturen beim Carbonisieren stand und ist bis mindestens 1.000 °C chemisch inert. Für die Eignung des abgeschiedenen Templatmaterials zur Herstellung eines Templats wird das Templatmaterial auf der Ablagerungsfläche, bei der es sich beispielsweise um ein Gefäß, einen Dorn, eine Platte oder einen Filter handeln kann, als poröser "$SiO_2$-Ruß" (hier als "Soot" oder als "$SiO_2$-Soot" bezeichnet) abgeschieden. Dies wird gewährleistet, indem die Temperatur der Ablagerungsfläche so niedrig gehalten wird, dass ein Dichtsintern des abgeschiedenen Templatmaterials verhindert wird. Als Zwischenprodukt wird in der Regel ein thermisch verfestigter aber poröser "Sootkörper" erhalten. Bei den so erhaltenen Sootkörpern erweist es sich als besonders günstig, dass diese herstellungsbedingt eine anisotrope Masseverteilung mit hierarchischer Porenstruktur aufweisen. Beim Sootabscheideprozess kann das Templatmaterial auch in Form von Sootpulver anfallen, das anschließend anhand von Granulations-, Press-, Schlicker- oder Sinterverfahren zu den Templat-Partikeln weiterverarbeitet wird. Als Zwischenprodukte sind Granulate oder Schülpen zu nennen. Die durch Sootabscheidung erzeugte Schicht des Templatmaterials kann mit geringem Aufwand zerkleinert werden, wobei Templat-Partikel mit plättchenartiger oder flockenartigen Morphologie erhalten werden.

In Verfahrensschritt (b) werden die Poren des Templatgerüsts mit der Kohlenstoff-Vorstufe infiltriert. Je nach Art der Kohlenstoff-Vorstufe bildet diese beim Carbonisieren einen mehr oder weniger porenhaltigen Kohlenstoff, so dass ein Zwischenprodukt erhalten wird, bei dem Poren des Templatmaterials mindestens teilweise mit feinporigem Kohlenstoffgefüllt sind.

Das so erhaltene Zwischenprodukt wird zu dem partikelförmigen porösen Kohlenstoffmaterial zerkleinert, und das Templatmaterial wird entfernt.

Die anschließend der Graphitisieren unterzogenen Kohlenstoffpartikel zeigen eine "schwammartige Struktur" aus einem filigranen Kohlenstoffgerüst mit dünnen spröden Wandungen, die im Wesentlichen eine mittlere Wandstärke im Bereich von 500 nm nicht überschreiten. Das Volumen der Kohlenstoffpartikel wird zum großen Teil oder sogar überwiegend von Makroporen gebildet, die fluidisch miteinander verbunden sind. Sie haben eine offene Porosität und sind netzwerkartig und dreidimensional von Poren und Porenkanälen durchzogen, so dass der Porenraum an unzähligen Stellen offen an der Partikel-Oberfläche endet.

Diese Struktur ist ohne nennenswerte Porositätsänderung nahezu vollständig graphitisierbar. Dabei ändert sich die Porenverteilung der vorhandenen, dreidimensional miteinander vernetzten Makroporen aufgrund der stabilen Wände und der "schwammartigen Struktur" wenig. Im Vergleich zu Mikro- oder Mesoporen zeigen Makroporen einen geringeren Grad an Ionen-Mobilität behindernden geometrischen Effekten. Die Mikroporen verschwinden beim Graphitisieren zum großen Teil.

Die nach dem Graphitisieren erhaltene Kohlenstoffstruktur zeigt hierarchische Porosität und ermöglicht eine gute Zugänglichkeit des Elektrolyten bei gleichzeitig im Vergleich zum Stand der Technik höherer Korrosionsfestigkeit

Beim Einsatz des so erzeugten Kohlenstoffmaterials als Elektrodenwerkstoff stellen die über relativ enge Kanäle dreidimensional miteinander vernetzten Extemplat-Poren ein großes Porenvolumen zur Verfügung, das zur Aufnahme und Fixierung von elektrolytischem Aktivmaterial geeignet ist.

Als Kohlenstoff-Vorstufe werden hochmolekulare kohlenstoffreiche Verbindungen eingesetzt, insbesondere haben sich Pech, Zucker, Stärke, Polyvinylalkohol und Phenolharz bewährt.

Dabei werden dünne abgeschiedene Lagen und eine Kristallit-Morphologe mit viele Korngrenzen angestrebt, wie etwa eine nadelförmige Morphologie, die einen weiter unten noch näher erläuterten "Perienschnureffekt" bei der Anlagerung der katalytisch wirksamen Substanz fördern. Im Hinblick auf eine möglichst hohe Korrosionsbeständigkeit des Kohlenstoffmaterials werden aromatische Kohlenstoff-Vorstufen, wie etwa Peche, bevorzugt gegenüber aliphatischen Kohlenstoff-Vorstufen eingesetzt.

In dem Zusammenhang hat es sich bewährt, wenn das graphitisierte, partikelförmige, poröse Kohlenstoffmaterial Kristallite mit nadelartiger Morphologie und Abmessungen von mindestens 20 nm, bevorzugt mindestens 50 nm, und ganz besonders bevorzugt mindestens 70 nm enthält.

Die Kristallitgröße wird dabei auf Basis eines Röntgendiffraktogramms aus der gemessenen Verbreiterung von Röntgenreflexen nach der sogenannten Scherrer-Gleichung ermittelt. Neben dem oben erläuterten Basalebenenabstand ist die Kristallitgröße ein Maß für den Graphitisierungsgrad. Große Kristallite stellen sich aufgrund eines hohen Graphitisierungsgrades ein.

Die nadelartige Morphologie ist elektronenmikroskopisch feststellbar.

Trotz des hohen Graphitisierungsgrades wird vorzugsweise eine hohe spezifische Oberfläche (BET) des graphitisierten partikelförmigen, porösen Kohlenstoffmaterials eingestellt. Diese liegt vorteilhafterweise im Bereich von 5 $m^2/g$ bis 200 $m^2/g$.

Vorzugsweise wird als katalytisch wirksame Substanz ein Edelmetall, ausgewählt aus der Platingruppe, vorzugsweise Platin, oder eine Legierung des Edelmetalls eingesetzt.

Beim Einsatz des Kohlenstoffmaterials als Elektrode einer Sauerstoff/Wasserstoff-Brennstoffzelle entsteht bei der Katalyse der Sauerstoffreduktionsreaktion im Idealfall ausschließlich Wasser, aber nicht das korrosiv wirkende Wasserstoffperoxid ($H_2O_2$). Die Generierung von $H_2O_2$ wird durch den Einsatz von Katalysatormetall aus der Platingruppe wirksam unterdrückt. Die Platingruppe umfasst die folgenden Edelmetalle: Ru, Rh, Pd, Os, Ir, Pt. Diese liegen in reiner Form oder als Legierung untereinander oder mit einem oder mehreren anderen Metallen vor, insbesondere mit Ti, V, Cr, Mn, Fe, Co, Ni, Cu, Zn, Al, Mo, Se, Sn, W, Nb, Ta, Pb, Bi, Au, Ag, Sc, Y.

Dabei hat es sich bewährt, wenn das Belegen mit katalytisch wirksamer Substanz in Verfahrensschritt (e) eine Maßnahme umfasst, bei der eine Lösung einer Edelmetall-Verbindung auf dem Kohlenstoffmaterial aufgebracht und unter Bildung einer Ablagerung katalytisch wirkender Partikel auf dem porösen Kohlenstoffmaterial einer Zersetzungsbehandlung unterzogen wird.

Die Edelmetall- Verbindung bildet einen Precursor für das eigentliche katalytisch wirksame Material.

Damit der Porenraum des Kohlenstoffmaterials homogen infiltriert wird, werden zum Beladen in der Regel Lösungen sogenannte Vorläufer-Verbindungen (Precursor) eingesetzt. Das sind Salze oder Komplexe der katalytisch wirksamen Metalle, die in Lösungsmittel löslich sind. Dadurch, dass das katalytisch wirksame Material in einer Lösung bereitgestellt wird, wird es homogen und feinteilig abgeschieden, ohne Agglomeratbildung auf dem Katalysatorträger, was zu einer hohen katalytische Effizienz beiträgt. Um die örtliche Verteilung der Vorläufersubstanz in den Poren des Kohlenstoffmaterials zu verbessern, können unterstützend Mikrowellen- oder Ultraschallenergie eingesetzt werden.

Beim oder nach dem Beladen wird die Vorläufersubstanz thermisch behandelt, und dabei das Metall ausgefällt oder reduziert. Eine thermische Behandlung, bei der die Vorläufersubstanz das Metall freigibt, erfolgt typischerweise an Luft, Wasserstoff oder unter Inertgas. Die Temperaturen liegen im Bereich von 300 bis 700° C, vorzugsweise im Bereich von 400° bis 600° C. Die Behandlungsdauern liegen im Bereich von 0,5 bis 10 h, vorzugweise im Bereich von 1 bis 3 h.

Der thermischen Behandlung geht in der Regel ein Trocknungsschritt voraus, der beispielsweise bei 80° bis 170° C, vorzugsweise bei 100° bis 150° C und während einer Dauer von 1 bis 48 h, vorzugsweise einer Dauer von 12 to 24 h erfolgt. Im Falle wässriger Lösungen entspricht das Volumen einer Imprägnierungslösung vorzugsweise 80% oder mehr, bevorzugt 95 bis 100% der Wasserabsorptionskapazität des Trägermaterials.

In den Precursor Verbindungen liegen die Metalle im nullwertigen Zustand oder als Kationen vor. Als Anionen oder Liganden haben sich Nitrate, Nitrite, Chloride, Acetate, Acetylacetonate, Hydroxyacetate oder Hydroxide bewährt. Möglich sind aber auch Phosphate, Azide, Borate (inklusive Fluoroborate, Pyrazolylborate), Sulfonate, substituierte Carboxylate wie Trifluoroacetate, Hydroxycarboxylate, Aminocarboxylate, Alkoxide, Komplexe mit N-haltigen Liganden wie Aminen, N-heterocyclischen Verbindungen (zum Beispiel: Pyrrol, Aziridin, Indole, Piperidin, Morpholin, Pyridin, Imidazol, Piperazin, Triazole, und deren substituierten Derivate), Aminoalkohole (zum Beispiel:Ethanolamin), Aminosäuren (zum Beispiel: Glycin und weitere dem Fachmann geläufige), Amide (zum Beispiel: Formamide, Acetamide), und Nitrile wie Acetonitril. Davon als bevorzugt können Nitrate, Formiate, Acetate, Trifluoroacetate, Propionate, Oxalate und Citrate gelten.

Besonders bevorzugte Beispiele für Edelmetall-Verbindungen sind Palladiumtetraammoniumnitrat, Palladiumoxalat, Palladium(II)chlorid, Palladium(II)nitrat und Palladium(II)sulfat, Natriumpalladium(II)tetrachlorid, Natriumpalladiumchlorid, Ammoniumperrhenat, Natriumperrhenat, Kaliumperrhenat, Rheniumheptoxid, Gold(III)chlorid, Tetrachlorogold(III)säure, Silbernitrat,

Silbernitrit, Silberoxide Silberfluorid, Silberhydrogenfluorid, Silbercarbonat, Silberoxalat, Silberazid, Silbertetrafluoroborat, Silberacetat, Silberpropionat, Silberbutanoat, Silberethylbutanoat, Silberpivalat, Silbercyclohexanebutanoat, Silberethylhexanoat, Silberneodecanoat, Silberdecanoat, Silbertrifluoroacetat, Silberpentafluoropropionat, Silberheptafluorobutyrat, Silbertrichloroacetat, Silber-6,6,7,7,8,8,8-heptafluoro-2,2-dimethyl-3,5-octanedionat, Silberlactat, Silbercitrat, Silberglycolat, Silberglyconat, Silberbenzoat, Silbersalicylat, Silberphenylacetat, Silbernitrophenylacetat, Silberdinitrophenylacetat, Silberdifluorophenylacetat, Silber-2-fluoro-5-nitrobenzoat, Silberacetylacetonat, Silberhexafluoroacetylacetonat, Silbertrifluoroacetylacetonat, Silbertosylat, Silbertriflat, Silbertrispyrazolylborat, Silbertris(dimethylpyrazolyl)borat, Silberamminkomplexe, Trialkylphosphin- und Triarylphosphinderivate von Silbercarboxylaten, Silberbeta-diketonat, Silberbeta-diketonat-Olefinkomplexe und Silbercyclopentadienide; Gold(III)acetat, Gold(III)chlorid, Tetrachlorogoldsäure, Goldazid, Goldisocyanid, Goldacetoacetat, Imidazol Gold ethylhexanoate und Gold hydroxide acetate isobutyrate; Palladiumacetat, Palladiumpropionat, Palladiumethylhexanoat, Palladiumneodecanoat, Palladiumtrifluoracetat, Palladiumoxalat, Palladiumnitrat, Palladiumchlorid, Tetraamminpalladiumhydroxide, Tetraamminpalladiumnitrate; Ruthenium(III) chlorid, Ruthenium(III) acetylacetonat, Ruthenium(III) acetat, Ruthenium carbonylkomplexe, Ruthenium perchlorat, Rhodium(III)chlorid, Rhenium(III) chlorid, Rhodiumnitrat, Ammoniumchloroiridat und Ir-(III)-chlorid, Ir(-IV)-chlorid

In einer bevorzugten Ausführungsform bezieht sich die vorliegende Erfindung auf platinbeladene Kohlenstoffkatalysatoren. Für Platin kommen als Precursors zum Beispiel: Nitrate, Carboxylate, beta-Diketonate und auch Verbindungen mit Pt-C-Bindungen in Frage. Davon sind divalente Platin(II)-Komplexe bevorzugt. Ebenfalls als bevorzugt zu betrachten sind: Ammoniumsalze wie Ammoniumhexachloroplatinat (NH4)2PtCl6 und Ammoniumtetrachloroplatinat (NH4)2PtCl4; Natrium und Kaliumsalze von Halogeno, Pseudohalogeno oder Nitritoplatinaten wie zum Beispiel: Natriumhexachloroplatinat Na2PtCl6, Kaliumtetrachloroplatinat K2PtCl4, Kaliumhexabromoplatinat K2PtBr6, Kaliumtetranitritoplatinate K2Pt(NO2); protonierte Formen wie Hexachloroplatinsäure H2PtCl6, Hexabromoplatinsäure H2PtBr6, Hexahydroxoplatin(IV)säure H2Pt(OH)6; Diammin- und Tetraamminverbindungen wie Cis- oder Transplatin Dichlorodiamminplatin(II) Pt(NH3)2Cl2, Tetraamminplatindichlorid [Pt(NH3)4]Cl2, Tetraamminplatindihydroxid [Pt(NH3)4](OH)2, Tetraammineplatindinitrit [Pt(NH3)4](NO2)2, tetramminplatinumdinitrat Pt(NH3)4(NO3)2, Tetramminplatinbicarbonat [Pt(NH3)4](HCO3)2, Tetraammineplatintetrachloroplatinat [Pt(NH3)4]PtCl4; Platinumdiketonate wie Platin(II) 2,4-pentandionat Pt(C5H7O2)2;; [Pt(CN)6]4+, Platinformiat, Platinacetat, Platinpropionat, Platincarbonat, Platinsulfit, Platinnitrat, Platinperchlorat, Platinbenzoat, Platinneodecanoat, Platinoxalat, Ammoniumhexafluoroplatinat, Ammoniumtetrachloroplatinat, Natriumhexafluoroplatinat, Kaliumhexafluoroplatinat, Natriumtetrachloroplatinat, Kaliumhexabromoplatinat, , Tetraammineplatinhydroxid, platinum(II) 2,4-pentanedionate, Diplatintrisdibenzylideneacetonat, Platinsulfat and Platindivinyltetramethyldisiloxane.

Handelt es sich um Precursor Lösungen in organischen Lösungsmitteln, dann kommen etwa Pt-Carboxylate oder gemischte Carboxylate in Frage, zum Beispiel: Pt-Formiat, Pt-Acetat, Pt-Propionat, Pt-Benzoate, Pt-Octanoat, Pt-Stearat, Pt-Neodecanoate Weitere geeignete Vorläufersubstanzen für organische Mischungen sind Aminoorgano-Platinumverbindungen wie Pt(diaminopropane)(ethylhexanoat), aber auch Carbonylverbindungen.

Als organische Lösungsmittel kommen zum Beispiel: gesättigte paraffinische Kohlenwasserstoffe mit 6 bis 12 C-Atomen pro Molekül in Frage, ferner naphthenische Kohlenwasserstoffe mit 6 bis 12 C-Atomen pro Molekül und auch aromatische Kohlenwasserstoffe mit 6 bis 11 C-Atomen pro Molekül

Besonders bevorzugt sind einfache Vorläufersubstanz-Lösungen, wie $PtCl_4$ in $H_2O$; Pt-Nitratlösung aus $H_2Pt(OH)$ und $HNO_3$; $H_2PtCl_6$ in $H_2O$; sowie $[Pt(NH_3)_4](NO_3)_2$ in $H_2O$ und insbesondere Platinoxalat.

Platinoxalat ist in wässrigem Medium löslich. Oxalate sind Salze der Oxalsäure ($C_2H_2O_4$). Gleichwirkend zu Oxalaten sind Oxalatderivate, bei denen zwischen den Carboxylgruppen ein organischer Rest angeordnet ist.

Ein weiterer besonderer Vorteil von Edelmetall-Oxalaten liegt darin, dass aus deren Lösungen praktisch sehr leicht das Edelmetall abgeschieden werden kann und dabei ansonsten nur $CO_2$ und $H_2O$ freigesetzt werden. Dies kann bereits bei Temperaturen von weniger als 300 °C erfolgen. Außerdem enthalten derartige Edelmetall-Oxalat-Lösungen keine Halogenide, die ansonsten nach der Abscheidung des Metalls in einem weiteren Reinigungsschritt entfernt werden müssten.

Da bei diesen niedrigen Temperaturen noch keine Ostwaldreifung der Edelmetallpartikel, insbesondere der Pt-Partikel, auftritt, können die Ablagerungen auf dem Kohlenstoffmaterial unterhalb von 300°C zu Edelmetall-Nanopartikeln kleiner Grö-ße reduziert werden. Auf dieses Weise wird eine feinverteilte Dispersion des Edelmetalls, einhergehend mit einer größeren elektrochemisch aktiven Oberfläche erreicht.

Auf diese Weise gelingt es, beim Belegen mit katalytisch wirksamer Substanz in Verfahrensschritt (e) und einer anschließenden Zersetzungsbehandlung Edelmetall-Nanopartikel mit einer mittleren Größe zwischen 1-10 nm, bevorzugt weniger als 8 nm, weiter bevorzugt weniger als 5 nm und ganz besonders bevorzugt zwischen 1-3 nm zu erzeugen.

Beim Einsatz des mit Edelmetall-Nanopartikeln belegten Kohlenstoffmaterials als Elektrodenmaterial einer Brennstoffzelle ergibt sich eine höhere Zellspannung auch ohne erhöhte Massenbeladung mit Edelmetall- bzw. Legierungs-Nanopartikeln, da sich die Edelmetall-Partikel bevorzugt im Bereich der zahlreichen Kristallit-Korngrenzen ablagern und dabei eine perlenschnurähnliche Struktur bilden. Innerhalb der "Perlenschnur-Anordnung" ergibt sich ein besonders kleiner Abstand der Edelmetall- beziehungsweise Legierungs-Nanopartikel zueinander.

Hinsichtlich des Trägerkatalysators mit einem Träger aus porösem graphitisierten Kohlenstoffmaterial wird die oben genannte Aufgabe ausgehend von einem Trägerkatalysator der eingangs genannten Gattung erfindungsgemäß dadurch gelöst, dass das poröse graphitisierte Kohlenstoffmaterial aus polykristallinem Kohlenstoff besteht, der einen Graphitisierungsgrad aufweist, der durch einen Basalebenenabstand d002 von weniger als 0,338 nm definiert ist, und eine hierarchischer Porenstuktur mit einem - mittels Quecksilber-Porosimetermessung ermittelten - Porenvolumen von mindestens 0,5 $cm^3$/g aufweist, wobei mindestens 75% des Porenvolumens auf Makroporen im Größenbereich von 100 bis 5.000 nm entfallen.

Das graphitisierte partikelförmige, poröse Kohlenstoffmaterial gemäß der Erfindung zeichnet sich durch einen hohen Graphitisierungsgrad - definiert durch einen Abstand der hexagonalen Basalebenen d002 von weniger als 0,338 nm - bei gleichzeitig hoher Porosität - definiert durch ein Porenvolumen von mindestens 0,5 $cm^3$/g - durch eine hierarchische Strukturierung der Porosität sowie durch seine kristalline Struktur aus. Der nach obiger Gleichung (1) berechnete Graphitisierungsgrad des Kohlenstoffmaterials beträgt 69,67% oder mehr. Das poröse graphitisierte Kohlenstoffmaterial besteht aus polykristallinem, das heißt, Kristallite aufweisendem Kohlenstoff. Die Korngrenzen stellen gestörte Zonen mit einer im Vergleich zum ungestörten Kristall höheren Reaktivität dar, an denen sich katalytisch wirksame Substanzen bevorzugt anlagern können.

Der hohe Graphitisierungsgrad gewährleistet eine gute Beständigkeit des Kohlenstoffmaterials, insbesondere bei einem Einsatz als Elektrode einer Brennstoffzelle auf Seiten der Sauerstoff-Reduktionsredaktion. Er geht mit einem geringen Anteil an Poren mit einem Durchmesser von weniger als 100 nm einher, der weniger als 25 % des Gesamt-Porenvolumens ausmacht; davon ein vernachlässigbar kleiner Volumenanteil an Mikroporen mit Porengrößen von weniger als 2 nm.

Trotz des hohen Graphitisierungsgrades weisen die porösen graphitisierten Teilchen eine hohe Porosität auf. Die hohe Porosität mit dem gleichzeitig hohen Anteil an Makroporen im Größenbereich von 100 bis 5.000 nm gewährleistet ein hohes Aufnahmevermögen des Kohlenstoffmaterials für die katalytisch wirksame Substanz und eine gute Zugänglichkeit.

Infolge der hierarchisch strukturierten Porosität mit einem hohen Anteil an Makroporen ist die aktive Oberfläche über ein durchgängiges makroporöses Transportsystem für den Elektrolyten zugänglich. Die Zugänglichkeit durch den Elektrolyten gewährleistet einen guten Protonentransport zu den homogen dispergierten, katalytisch wirksamen Nanopartikeln, so dass Protonen und Sauerstoff effektiv an die Katalysatorschichten heran- und das entstehende Wasser effektiv abgeführt werden kann.

Diese hierarchische Porosität wird beispielsweise erreicht, indem das Kohlenstoffmaterial über ein Templatverfahren erzeugt wird, bei dem ein Templatgerüst aus einem anorganischen Werkstoff bereitgestellt wird. Das Templatgerüst kann über ein Plasma- oder CVD-Sootabscheideverfahren erzeugt werden, wie dies oben anhand des erfindungsgemäßen Verfahrens erläutert ist.

Im Hinblick auf eine möglichst hohe elektrochemisch aktive Oberfläche der katalytisch wirksamen Substanz weist das Kohlenstoffmaterial trotz des hohen Graphitisierungsgrades vorzugsweise eine spezifische Oberfläche (BET) im Bereich von 5 $m^2/g$ bis 200 $m^2/g$ auf.

Es hat sich als günstig erwiesen, wenn das poröse graphitisierte Kohlenstoffmaterial in Form von Partikeln mit einer mittleren Partikelgröße von weniger als 20 $\mu m$, vorzugsweise weniger als 10 $\mu m$ vorliegt. Diese geringe mittlere Partikelgröße erweist sich insbesondere für die Herstellung besonders dünner Katalysatorschichten als vorteilhaft.

In dem Zusammenhang hat es sich auch bewährt, wenn das poröse graphitisierte Kohlenstoffmaterial Kristallite mit Abmessungen - ermittelt nach der Methode von Scherrer - von mindestens 20 nm, bevorzugt mindestens 50 nm, und ganz besonders bevorzugt mindestens 70 nm aufweist.

Die Kristallitgröße wird dabei auf Basis einer röntgenographischen Strukturanalyse aus der gemessenen Verbreiterung von Röntgenreflexen nach der sogenannten Scherrer-Gleichung ermittelt. Neben dem oben erläuterten Basalebenenabstand ist die Kristallitgröße ein Maß für den Graphitisierungsgrad. Große Kristallite stellen sich aufgrund eines hohen Graphitisierungsgrades ein.

Bevorzugt sind die Kristallite nadelförmig. Die nadelartige Morphologie ist elektronenmikroskopisch zu beobachten. Sie bewirkt eine hohe elektrische Leitfähigkeit. eine hohe Stabilität gegenüber Korrosion und sie trägt im Vergleich zu sphärischen Morphologien zu einem höheren Korngrenzenanteil bei.

Es hat sich bewährt, wenn als katalytisch wirksame Substanz ein Edelmetall, ausgewählt aus der Platingruppe, vorzugsweise Platin, oder eine Legierung des Edelmetalls vorgesehen ist, und dass das Edelmetall in Form von Edelmetall-Nanopartikeln mit einer mittleren Größe zwischen 1-10 nm, bevorzugt weniger als 8 nm, weiter bevorzugt von weniger als 5 nm und ganz besonders bevorzugt zwischen 1-3 nm vorliegt.

Beim Einsatz des Kohlenstoffmaterials als Elektrode einer Sauerstoff/Wasserstoff-Brennstoffzelle entsteht bei der Katalyse der Sauerstoffreduktionsreaktion im Idealfall ausschließlich Wasser, aber nicht das korrosiv wirkende Wasserstoffperoxid ($H_2O_2$). Die Generierung von $H_2O_2$ wird durch den Einsatz von Katalysatormetall aus der Platingruppe wirksam unterdrückt. Die Platingruppe umfasst die folgenden Edelmetalle: Ru, Rh, Pd, Os, Ir und Pt. Das Katalysatormetall liegt in reiner, unlegierter Form oder als Legierung untereinander oder mit einem oder mehreren anderen Metallen vor, insbesondere mit Ti, V, Cr, Mn, Fe, Co, Ni, Cu, Zn, Al, Mo, Se, Sn, W, Nb, Ta, Pb, Bi, Au, Ag, Sc, Y. Als Legierung mit Platin hat sich Pt3Co/Pt3Ni besonders bewährt.

Je kleiner die Edelmetall-Partikel sind, umso größer ist die effektive katalytisch wirksame Oberfläche. Im Hinblick darauf wird ein Trägerkatalysator bevorzugt, bei dem das Edelmetall in Form von Edelmetall-Nanopartikeln mit einer mittleren Grö-ße zwischen 1-10 nm, bevorzugt weniger als 8 nm, weiter bevorzugt von weniger als 5 nm und ganz besonders bevorzugt zwischen 1-3 nm vorliegt.

Eine Effizienzsteigerung ohne erhöhte Massenbeladung mit Edelmetall- bzw. Legierungs-Nanopartikeln ergibt sich, wenn sich die Edelmetall-Partikel im Bereich von Kristallit-Korngrenzen abgelagert haben.

Die Edelmetall-Nanopartikel bilden dabei eine perlenschnurähnliche Struktur, innerhalb der sich ein besonders kleiner Abstand der Edelmetall- beziehungsweise Legierungs-Nanopartikel zueinander ergibt.

Ausführungsbeispiel

Nachfolgend wird die Erfindung anhand eines Ausführungsbeispiels und einer Zeichnung näher erläutert. Im Einzelnen zeigt

**Figur 1** eine Wasserstoff/Sauerstoff-Brennstoffzelle in einem Längsschnitt durch eine Wabe der Brennstoffzelle in schematischer Darstellung,

**Figur 2** eine rasterelektronenmikroskopische Aufnahme eines graphitisierten Kohlenstoffpartikels mit hierarchischer Porosität,

**Figur 3** ein Diagramm zur Porengrößenverteilung des porösen Kohlenstoffmaterials,

**Figur 4a** eine TEM-Aufnahme eines mit Platinpartikeln belegten Kohlenstoffteilchens nach dem Graphitisieren,

**Figur 4b** schematische Skizzen zur Erläuterung der Erscheinungsform des Basalebenenrandes des Kohlenstoffteilchens von Figur 4a,

**Figur 5** zyklische Voltammogramme einer herkömmlichen mit Platin belegten Kohlenstoffelektrode in einem Elektrolyten aus 0,1 M $H_2SO_4$, im Vergleich mit zyklischen Voltammogrammen einer Kohlenstoffelektrode gemäß der Erfindung in einem Elektrolyten aus 0,1 M $H_2SO_4$, ,

**Figur 6** zyklisches Voltammogramme der herkömmlichen Kohlenstoffelektrode ohne Platinbelegung und die Entwicklung mit der Zyklenzahl im Vergleich zum erfindungsgemäßen Kohlenstoffmaterial ohne Platinbelegung,

**Figur 7** eine TEM-Aufnahme der Pt-Belegung und der Kristallstruktur des Kohlenstoffmaterials, und

**Figur 8** XRD-Detailspektren mehrerer mit Platin belegter Trägerkatalysatoren gemäß der Erfindung.

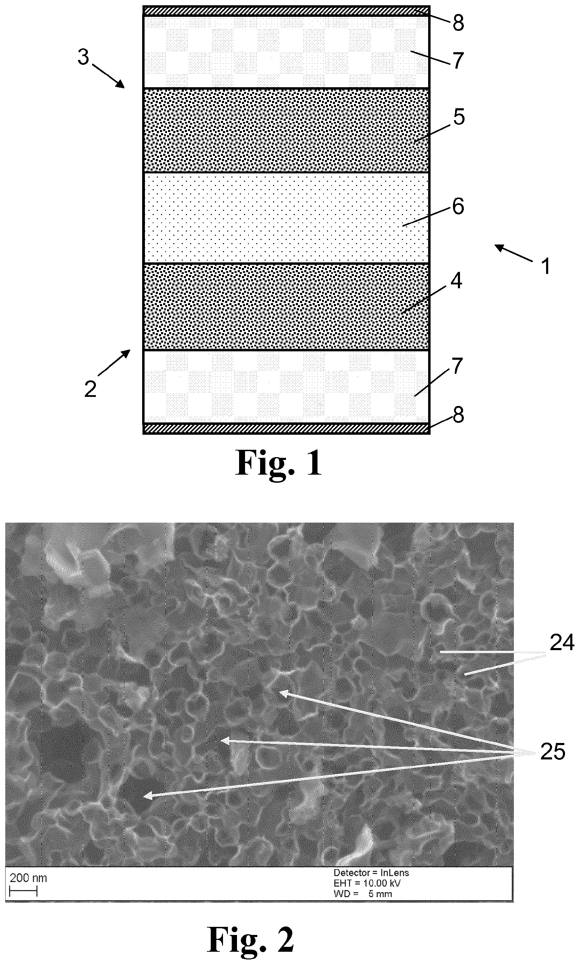

Die in **Figur 1** schematisch dargestellte Zelle 1 einer PEM-Brennstoffzelle umfasst eine im Betrieb mit Wasserstoff umspülte, poröse Anode 2 und eine im Betrieb mit Sauerstoff umspülte poröse Kathode 3. Wichtiger Bestandteil beider Elektroden 2, 3 ist eine aktive Schicht 4 beziehungsweise 5, in der die anodische Reaktion (Schicht 4) beziehungsweise die kathodische (Schicht 5) Reaktion ablaufen.

Die aktiven Schichten 4, 5 bestehen aus porösem Kohlenstoff als Träger für einen Elektrokatalysator, der in beiden Fällen aus reinem, unlegiertem Platin besteht. Zwischen den beiden aktiven Schichten 4, 5 ist ein Elektrolyt 6 in Form einer etwa 50 $\mu$m dicken Protonen leitenden Membran aus sulfonierten Tetrafluorethylen-Polymer (PTFE) vorgesehen. Der Elektrolyt 6 gewährleistet die Protonenleitung von der aktiven Schicht 4 zur aktiven Schicht 5.

Der aktiven Schicht 4 wird Wasserstoff und der aktiven Schicht 5 wird Sauerstoff zugeführt. Zur Homogenisierung der Gaszufuhr ist den aktiven Schichten 4, 5 jeweils eine Diffusionsschicht 7 aus einem elektrisch leitfähigen Kohlenstoffgewebe vorgelagert, die an plattenförmige Stromabnehmer 8 angrenzen.

Die aktiven Schichten 4; 5 bestehen aus porösen, graphitisierten Kohlenstoffpartikeln, die mit Platin belegt sind. Das mit Edelmetall-Nanopartikeln belegte Kohlenstoffmaterial der Erfindung ist für die Herstellung beider poröser Schichten 4, 5 geeignet; erweist sich aber als besonders geeignet für die Herstellung der sauerstoffseitigen aktiven Schicht 5. Deren Herstellung auf Basis eines Templatverfahrens wird im Folgenden anhand eines Beispiels näher erläutert.

Herstellen von Templatmaterial mit hierarchischer Porenstruktur

Die Herstellung des Templatmaterials erfolgt über ein übliches CVD-Sootabscheideverfahren. Dabei werden einem Flammhydrolysebrenner $SiCl_4$ als Einsatzmaterial für die Bildung von $SiO_2$-Partikeln sowie als Brennergase Sauerstoff und Wasserstoff zugeführt. Die in der Brennerflamme gebildeten $SiO_2$-Primärpartikel mit Größen im Nanometerbereich lagern sich zu mehr oder weniger sphärischen Aggregaten und Agglomeraten zusammen. Diese "Sekundärteilchen" bestehen aus einer unterschiedlichen Anzahl von Primärpartikeln und zeigen daher grundsätzlich eine breite Teilchengrößenverteilung. Innerhalb der Sekundärteilchen - zwischen den Primärpartikeln - liegen besonders kleine Hohlräume und Poren im Nanometerbereich vor, also so genannte Mesoporen, wohingegen sich zwischen den einzelnen Sekundärteilchen Makroporen mit typischen lichten Weiten um 400 nm bis 1.000 nm ausbilden.

Im Verlauf des Soot-Abscheideverfahrens wird auf einer Ablagerungsfläche schichtweise ein poröser $SiO_2$-Rohling (als sogenannter $SiO_2$-Sootkörper) abgeschieden. Während des Abscheideprozesses stellt sich auf der Rohling-Oberfläche eine mittlere Temperatur von etwa 1.200 °C ein, so dass das $SiO_2$-Sootmaterial eine geringe mittlere relative Dichte von etwa 22 % (bezogen auf die Dichte von Quarzglas 2,21 $g/cm^3$) hat.

Wegen der geringen Dichte lässt sich das poröse Sootmaterial leicht zerkleinern. Es werden nicht sphärische, plättchenförmigen Sootpartikel erhalten, die sich mikroskopisch betrachtet aus einer Vielzahl sphärischer Aggregate aus $SiO_2$-Primärpartikeln zusammensetzen, die über Sinterhälse miteinander verbunden sind und so ein "Sootgerüst" oder "Templatgerüst" bilden. Diese Sootpartikel werden im weiteren Herstellungsprozess als Templatmaterial-Partikel eingesetzt. Sie zeigen herstellungsbedingt eine anisotrope Masseverteilung mit hierarchischer Porenstruktur, wie oben erläutert.

Imprägnieren des Templatmaterials mit einer Kohlenstoff-Vorläufersubstanz

Die Sootpartikel werden mit fein gemahlenem Pulver aus Pech im Volumenverhältnis 1:1 (Pech : Sootpartikel) mittels Mischer homogen miteinander vermischt. Die Mischdauer beträgt etwa 5 min. Die Partikelmischung wird anschließend auf eine Temperatur von 300°C erhitzt. Das niedrig viskose Pech dringt in die Poren der Sootpartikel ein und infiltriert diese. Das Volumenverhältnis von Pech und Sootpartikel ist dabei so gewählt, dass das Pech die Poren soweit füllt, dass nach der Infiltration kein nennenswertes freies Porenvolumen übrig bleibt. Nach einer Infiltrationsdauer von etwa 30 min ist die Infiltration der Poren weitgehend abgeschlossen. Die Poren der $SiO_2$-Sootpartikel sind nun weitgehend mit einer zähflüssigen Pechmasse gefüllt.

Danach wird die Temperatur langsam auf 700 °C unter Stickstoff erhöht und das Pech zu Kohlenstoff reduziert (carbonisiert). Die ursprüngliche Pechschicht schrumpft dabei und bildet danach eine dünne Kohlenstoffschicht mit geringer Mikroporosität und einer Dicke von im Mittel etwa 50 nm.

Nach dem Abkühlen wird eine leicht poröse Kompositmasse aus einem porösen Templatgerüst aus $SiO_2$-Sootpartikeln erhalten, das überall mit einer Lage aus graphitisierbarem Kohlenstoff belegt ist. Das $SiO_2$-Templatgerüst wird anschließend entfernt, indem die Kompositmasse in ein Bad aus 2-molarer NaOH-Lösung eingebracht wird.

Nach dem Wegätzen der $SiO_2$-Masse wird das Material gespült und getrocknet. Es werden Flocken aus porösem Kohlenstoff erhalten. Das vorher vom $SiO_2$-Templatgerüst belegte Volumen bildet nun einen zusammenhängenden Porenraum aus kleinen und großen Extemplat-Poren, die das gesamte Volumen des Kohlenstoffmaterials durchziehen.

Das so erzeugte Zwischenprodukt zeigt eine schwammartige Struktur mit einer Vielzahl zusammenhängender Poren und Hohlräume unterschiedlicher Größe. Die Hohlräume sind von filigranen Wandungen umgeben, deren Wandstärke 500 nm nicht überschreitet. Es wird schonend unter Einsatz einer Prallstrommühle zu einem partikelförmigen, porösen Kohlenstoffmaterial mit Partikelgrößen von weniger als 20 $\mu$m aufgebrochen und zerkleinert.

Zur Graphitisierung wird das partikelförmige poröse, templatmaterialfreie Kohlenstoffmaterial auf eine Graphitisierungs-Temperatur von 2.400 °C erhitzt. Infolge der schwammartigen Struktur des Kohlenstoff-Zwischenprodukts und aufgrund der stabilen Wände ändert sich die Porenverteilung der Makroporen beim Graphitisieren des Kohlenstoffmaterials kaum noch. Mikroporen verschwinden im Wesentlichen, so dass sich ein geringeres Gesamt-Porenvolumen als beim carbonisierten Kohlenstoffmaterial einstellt. Es wird ein graphitisiertes partikelförmiges, poröses Kohlenstoffmaterial erhalten, das aus polykristallinem Kohlenstoff mit hohem Graphitisierungsgrad besteht.

Die REM-Aufnahme von **Figur 2** zeigt die Struktur und Porenverteilung eines derartigen Kohlenstoffpartikels in hoher Vergrößerung.

Erkennbar ist die schwammartige Struktur, bei der größere Hohlräume 25 (Makroporen) mit Größen im Bereich von 0,1 bis 10 $\mu$m von filigranen Wandungen umgeben sind. Daneben findet sich eine Vielzahl kleinerer Hohlräume beziehungsweise Kanäle 24; Mikroporen sind nicht zu erkennen. Etwas mehr als 80 % des Volumens der Kohlenstoffpartikel sind Porenraum. Eine Messung der spezifischen inneren Oberfläche nach der BET-Methode ergibt Messwerte um 20 $m^2$/g. Die stattgefundene Graphitisierung des Kohlenstoffmaterials zeigt sich darin, dass die Ränder der Hohlräume 25 und Kanäle 24 ein kantiges Erscheinungsbild haben, und nicht - wie vor der Graphitisierung - rund sind.

Die schwammartige Struktur erstreckt sich in allen Raumrichtungen und stellt näherungsweise ein negatives Abbild der Massenverteilung des ursprünglichen $SiO_2$-Templatgerüsts dar. Sie weist eine hierarchische Porenstruktur auf. Diese ergibt sich unter anderem dadurch, dass das entfernte Templatmaterial Hohlräume im Mesoporen- und Makroporenbereich hinterlassen hat, die dreidimensional miteinander vernetzt sind. Die diesen vernetzten Hohlraum umgebende Kohlenstoffablagerung besteht vorwiegend aus niedrigporösem, polykristallinen, graphitisierten Kohlenstoff.

Wichtig ist, dass die einzelnen Hohlräume nicht abgeschlossen, sondern mit anderen Meso- und Makroporen fluidisch verbunden sind, so dass in und auf der schwammartigen Struktur fixierte katalytisch wirksame Substanz für Elektrolyten zugänglich ist und Wasser oder andere Reaktionsprodukte effektiv abgeleitet werden können.

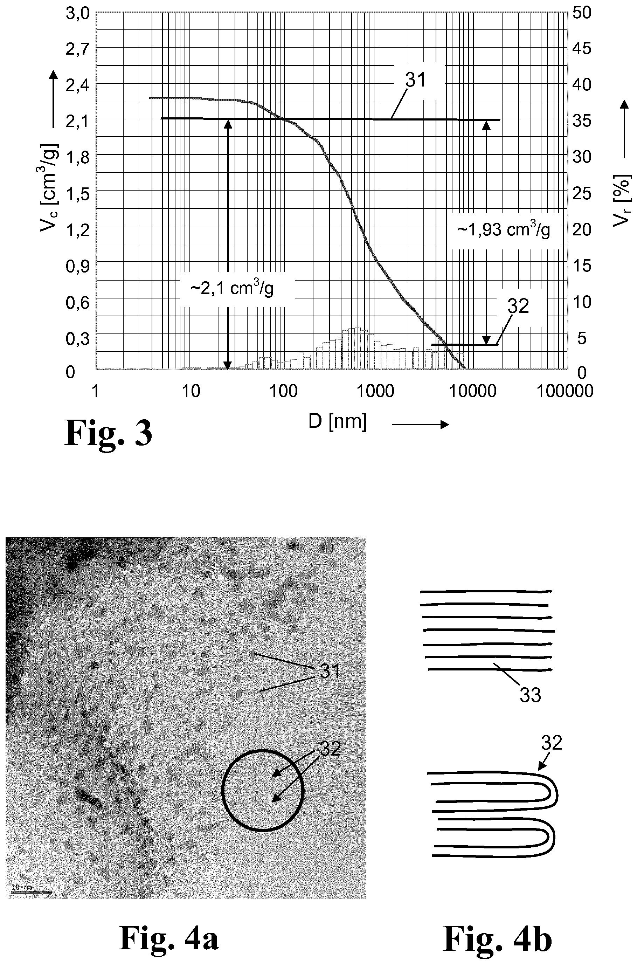

Das Diagramm von **Figur 3** zeigt die Porengrößenverteilung des graphitisierten porösen Kohlenstoffmaterials. Auf der linken Ordinate ist das kumulative Porenvolumen $V_c$ in [$cm^3$/g] und auf der rechten Ordinate das relative Porenvolumen $V_r$ in [%] gegen den Porendurchmesser D in [nm] aufgetragen. Es ist erkennbar, dass ein erstes Maximum der Porengrößenverteilung im Mesoporenbereich um 50 bis 60 nm und ein zweites Maximum der Porengrößenverteilung im Makroporenbereich bei Porengrößen von 500 bis 600 nm liegt. Es gibt auch eine Anzahl größerer Poren mit Porendurchmessern bis etwa 10.000 nm. Makroporen in der Größenordnung 100 bis 10.000 nm ergeben ein Gesamt-Porenvolumen etwa 2,1 $cm^3$/g (Differenz des kumulativen Porenvolumens zwischen der Nulllinie und Linie 31), wobei aber der größte Teil des Porenvolumens auf Makroporen in der Größenordnung 100 bis 5.000 nm entfällt, die ein Gesamt-Porenvolumen von etwa 1,93 $cm^3$/g ergeben (Differenz des kumulativen Porenvolumens zwischen den Linien 31 und 32); also etwa 92 % des Gesamt-Porenvolumens von etwa 2,27 $cm^3$/g. Die gezeigten Messergebnisse wurden mittels einer Quecksilber-Porosimetermessung erhalten.

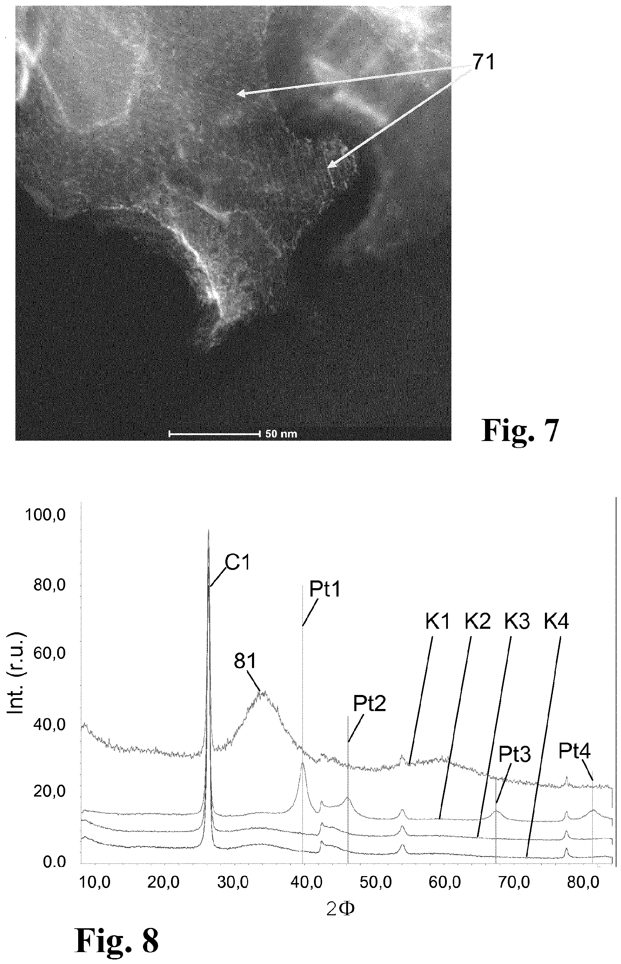

Der hohe Graphitisierungsgrad der schwammartigen Struktur zeigt sich darin, dass der Abstand d002 der (002)-Basalebenen mit hexagonaler Kristallstruktur weniger als 0,338 nm beträgt. Dieser Abstand wird röntgenographisch anhand der Beugungslinie der (002)-Ebene des graphitisierten Kohlenstoffmaterials bestimmt, wie in **Figur 8** gezeigt.

Ein hoher Graphitisierungsgrad trägt zu einer hohen Korrosionsfestigkeit des Kohlenstoffmaterials bei. Dieser Effekt wird noch dadurch verstärkt, dass die Enden der Basalebenen des graphitähnlichen Schichtgefüges ähnlich wie bei Glaskohlenstoff teilweise verschlossen sind. Dies zeigt exemplarisch die TEM-Aufnahme von **Figur 4a** eines mit Platinpartikeln 31 belegten Kohlenstoffteilchens nach dem Graphitisieren in extrem hoher Vergrößerung. Die Platinpartikel sind in dunkelgrauer Färbung erkennbar. Sie sind relative gleichmäßig verteilt und haben mittlere Größen um 2 nm.

Eine Basalebene des Kohlenstoffteilchens ist als leicht strukturierte, durchscheinende Fläche erkennbar. Der Basalebenen-Rand (mit einem Kreis markiert) scheint U-förmig umgebogen, so dass sich sein freies Ende 32 in Richtung der Graphitschicht zurückzieht. Die Basalebenen-Ende sind dadurch verschlossen.

**Figur 4b** zeigt das Umbiegen und Verschließen der Basalebenen-Enden 32 anhand einer Skizze im Vergleich zum Randverlauf von Basalebenen-Enden 33 in einem üblichen graphitischen Gefüge.

Die Korngrenzen des polykristallinen graphitisierten Kohlenstoffmaterials bilden gestörte Zonen, die im Vergleich zum ungestörten Kristall reaktiv sind. Für eine weitergehende Aktivierung wird das graphitisierte partikelförmige poröse Kohlenstoffmaterial einer 2-stündigen Aktivierungsbehandlung unter Luft bei einer Temperatur um 450°C unterzogen. Dadurch wird das graphitisierte Kohlenstoffmaterial strukturselektiv aktiviert, wobei vorwiegend an den Kristallit-Korngrenzen reaktive Oberflächengruppen entstehen, an denen sich Katalysator oder Katalysatorvorstufen bevorzugt verankern und anreichern.

Belegen des graphitisierten Kohlenstoffmaterials mit Edelmetall-Nanopartikeln

Die Belegung des Kohlenstoffmaterials erfolgt unter Einsatz von Platinoxalat (Pt-oxalat).

Herstellung von Platinoxalat

Die Herstellung von Pt-oxalat erfolgt durch Umsetzung von $H_2[Pt(OH)_6]$ mit Oxalsäure in Wasser. Es wurden 54,29 g entionisiertes Wasser sowie 18,01 g $H_2[Pt(OH)_6]$ (10,0 g Pt; 50 mmol) in einen 250 ml-Dreihalskolben mit 0,04 Pt-Oxalat-Lösung (Pt 0,24 mmol) als Starter unter Rühren (250 U/min) bei Raumtemperatur zugegeben. Die Suspension wurde ausgehend von 23 °C in einem Wasserbad innerhalb von 20 Minuten auf 40 °C aufgeheizt. Auf dieser Temperatur wurde die Suspension fünf Stunden lang gehalten und stündlich eine Menge von 2,568 g Oxalsäure-Dihydrat unter fortwährendem Rühren hinzugegeben. Nach dem Abkühlen unter Rühren auf 20 °C wurde die Suspension über einen 0,2 $\mu$m Membranfilter filtriert. Die Filtration erfolgte innerhalb von 30 Minuten und zeigte einen Filterrückstand von 0,5 g. Es werden 74,49 g Pt-Oxalat-Lösung mit einem Pt-Gehalt von 13,40 % erhalten, was einer Pt-Ausbeute von 99,82 % entspricht.

Fixierung von Platinoxalat auf dem Kohlenstoff-Trägermaterial

In einem Behälter werden 50 g der graphitisierten und aktivierten Kohlenstoffpartikel unter stetiger Durchmischung tropfenweise mit 42,37 g einer Platinoxalatlösung mit einem Platin-Gehalt von 10,12% versetzt. Die Lösungsmenge der Pthaltigen Lösung wird dabei experimentell so vorgegeben, dass sie dem spezifischen Porenvolumen des Materials nach der sogenannten "incipient wetness-Methode" entspricht - das bedeutet, das gegebene Porenvolumen wird vollständig mit der Lösung aufgefüllt.

Um eine homogene Verteilung der Lösung zu gewährleisten wird während und nach vollständiger Zugabe der Lösung das mit Pt-Lösung getränkte Kohlenstoffmaterial durchgeknetet bis eine gleichmäßig feuchte und rieselfähige Masse ohne Klumpen entstanden ist.

Das feuchte mit Pt-Lösung getränkte Kohlenstoffmaterial wird anschließend in zwei Temperaturstufen bei 150°C und 235°C über einen Gesamtzeitraum 2,5 h unter Inertgas ($N_2$) in einem Ofen getrocknet beziehungsweise kalziniert. Die Stickstoff-Atmosphäre wirkt ausreichend reduzierend, um Pt-Oxalat zu metallischem Platin zu zersetzen. Da keine Ostwaldreifung der Pt-Partikel auftritt, wird eine feinverteilte Dispersion des Platins mit Pt-Nanopartikeln mit einer mittleren Größe von 2 nm erhalten.

Die infolge der vorangegangenen Aktivierung der Oberfläche des Kohlenstoffmaterials erzeugte große aktive Oberfläche trägt zu einer agglomeratfreien Verteilung und festen Fixierung der Pt-Nanopartikel auf dem Kohlenstoffmaterial bei. Dabei zeigt sich eine Anreicherung mit Pt-Nanopartikeln im Bereich der Kanten und Ecken der Nanopartikel sowie an Kristallit-Korngrenzen. Dort bilden sich perlenschnurähnliche Aneinanderreihungen der Pt-Nanopartikel mit sehr kleinem Abstand zueinander.

Die TEM-Aufnahme von **Figur 7** zeigt ein mit Platinpartikeln belegtes Kohlenstoffteilchen. Die Platinpartikel erscheinen dabei als helle Punkte. Es sind fadenförmige Strukturen 71 erkennbar (sogenannte "Perlenstrukturen"). Diese werden durch feinteilige, enge Aneinanderreihung von Platinpartikeln entlang aktivierten Oberflächenstrukturen, wie etwa Korngrenzen, gebildet.

Messergebnisse

Über das elektrochemische Verhalten von Trägerkatalysatoren geben zyklovoltammetrischen Messungen mittels rotierender Scheibenelektroden Aufschluss. Dabei wird an die Arbeitselektrode (=Messelektrode) in einem Elektrolyten ein ansteigendes und anschließend ein abfallendes Potential angelegt und die Stromstärke in Abhängigkeit davon aufgezeichnet. Das Potential der Arbeitselektrode wird gegen eine Bezugselektrode bestimmt.

Die elektroaktive Substanz wird bei einem charakteristischen Potential oxidiert oder reduziert, was sich in betragsmäßig maximalen Stromwerten zeigt. Treten mehrere Strom-Maxima bei einem Zyklus auf, so kann dies darauf hindeuten, dass die Substanz über mehrere Stufen oxidiert beziehungsweise reduziert wird. Die dazugehörigen Spannungswerte entsprechen den Oxidations- und Reduktionspotentialen auf der Anoden- beziehungsweise auf der Kathodenseite. Allerdings kann auch Ladung von den Oberflächen und an die Oberflächen des Katalysatorträgermaterials übertragen werden.

Die Veränderungsgeschwindigkeit des Potentials - die potentielle Abtastrate - wirkt sich auf die Messergebnisse aus. Beispielsweise können sich bei hohen potentiellen Abtastraten Limitierungen im Ionentransport im Elektrolyten oder in der Elektrodenstruktur eher bemerkbar machen als bei geringen Abtastraten.

Voltammogramme sind somit Strom-Spannungs-Kurven, wobei auf der Ordinate der gemessene Strom (in A) gegen die angelegte Spannung (in V) aufgetragen ist.

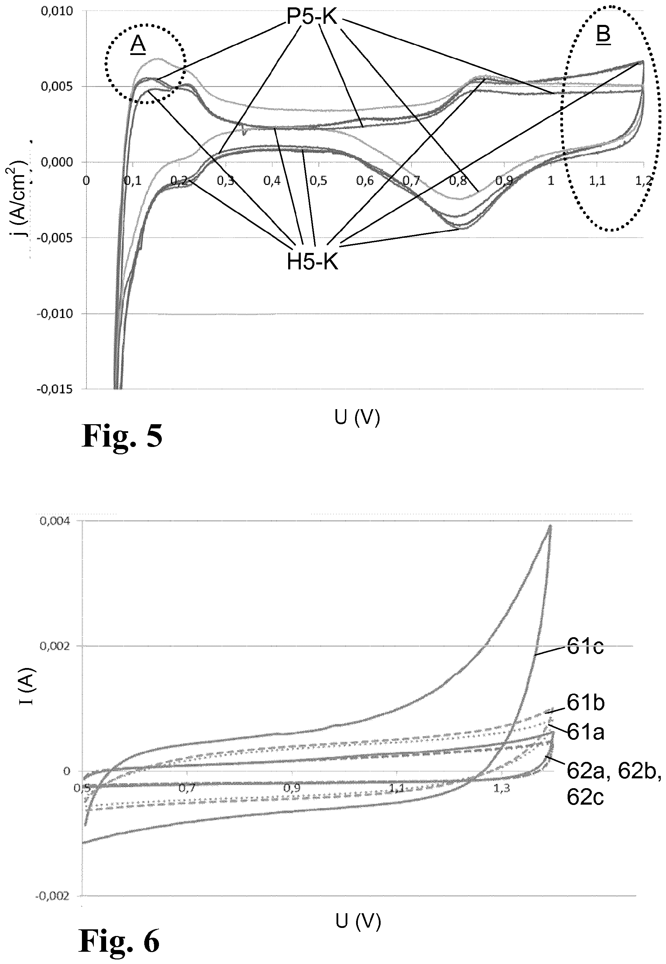

Im Diagramm von **Figur 5** sind Zyklovoltammogramme einer handelsüblichen Elektrode aus porösem Kohlenstoffmaterial als Träger für Platin (Firma Johnson Matthey; Handelsname "HiSpec"; im Folgenden als "Standard" bezeichnet) im Vergleich zu Zyklovoltammogrammen, gemessen bei porösem Kohlenstoffmaterial als Träger für Platin gemäß vorliegender Erfindung - und zwar jeweils bei Verwendung als Anode und als Kathode - eingezeichnet. Der besseren Übersichtlichkeit halber sind in Figur 5 die Verläufe der bei beiden kathodischen Voltammogramme für den erfindungsgemäßen Trägerkatalysator P5-K und für das Standardmaterial H5-K besonders gekennzeichnet. Die Platinbelegung ist dabei wie folgt:

P5-K: Standard-Kathode: $120\ cm^2 Pt/cm^2 = 0{,}040\ m^2\ Pt/mgPt$

H5-K: Kathode lt. Erfindung: $122\ cm^2 Pt/cm^2 = 0{,}041\ m^2\ Pt/mgPt$

Die Voltammogramme sind jeweils im Potentialbereich zwischen 0,0 und 1,2 V angelegter Spannung an der Arbeitselektrode gegen die Standard-Wasserstoff-Elektrode (SHE) mit einer Abtastrate von 50 mV/s gemessen; der Elektrolyt ist 0,1 M Schwefelsäure. Auf der Ordinate ist dabei die Stromdichte j (in $A/cm^2$) gegen die Spannung U (in V) aufgetragen.

Die Stromdichte-Spannungs-Kurven zeigen charakteristische Bereiche A, B, C und D, die das elektrochemische Verhalten der Elektroden bei den verschiedenen Umkehrpotentialen widerspiegeln und die im Folgenden näher erläutert werden.

So ist der Stromanstieg im Bereich A auf eine Beladung der Pt-Partikel mit Wasserstoff zurückzuführen. Das Flächenintegral ist ein qualitatives Maß für die verfügbare aktive Pt-Oberfläche.

Der Stromanstieg im Bereich B ist auf Korrosion des Kohlenstoff-Trägermaterials zurückzuführen. Diese ist umso ausgeprägter, je höher das Umkehrpotential liegt. Beim maximalen Wert des Umkehrpotentials von 1,2 V findet bei der Standard-Elektrode H5-K bereits ein ausgeprägter Verfall des Trägermaterials statt. Beim erfindungsgemäßen Elektrodenmaterial P5-K ist bei diesem Umkehrpotential noch kein Stromanstieg erkennbar. Es hat zeigt sich darüber hinaus gezeigt, dass die Zersetzung beim erfindungsgemäßen Elektrodenmaterial erst einem Umkehrpotential von 1,45 V bis etwa 1,50 V auftritt. Das erfindungsgemäße Elektrodenmaterial erlaubt somit eine um etwa 0,25 V höhere Überspannung ohne merkliche Zersetzung, was auf die höhere Korrosionsfestigkeit des graphitisierten Trägermaterials zurückzuführen ist.

**Figur 6** zeigt die Entwicklung des Ladungsumsatzes mit der Zyklenzahl für den Bereich B (der Kohlenstoffträgerzersetzung). Hierbei sind Zyklovoltammogramme des herkömmlichen Kohlenstoffträgermaterials, das auch bei der Messung von Figur 5 verwendet worden ist (jedoch ohne Edelmetallbelegung) im Vergleich zum erfindungsgemäßen Trägerkatalysatormaterial (ebenfalls ohne Edelmetallbelegung) aufgetragen. Es wurde im Potentialbereich zwischen 0,0 und 1,8 V angelegter Spannung mit einer Abtastrate von 100 mV/s gemessen. Als Gegenelektrode wird ein Platindraht verwendet, als Referenzelektrode dient Ag/AgCl; der Elektrolyt ist 2M Schwefelsäure.

Die mit 61 bezeichneten Voltammogramme wurden am Standardmaterial gemessen; die mit der Bezugsziffer 62 bezeichneten Voltammogramme sind dem Kohlenstoffträgermaterial der erfindungsgemäßen Elektrode zugeordnet. Es wurden jeweils drei Messungen vorgenommen, die in Figur 6 mit a, b und c bezeichnet sind. Die Messungen unterscheiden sich in ihren jeweiligen Zyklenzahlen wie folgt:

"a"  = 2 Zyklen
"b"  = 25 Zyklen
"c"  = 50 Zyklen

Daraus ist ersichtlich, sich beim herkömmlichen Kohlenstoffträgermaterial zwischen dem 2. Zyklus (Kurve 61a) und dem 50. Zyklus (Kurve 61c) eine dramatische Verschlechterung insbesondere im oben mit B bezeichneten Bereich, also dem Bereich der oxidativen Zersetzung des Kohlenstoff-Trägermaterials einstellt. Demgegenüber unterscheiden sich die Voltammogramme 62a, 62b und 62c des Kohlenstoffmaterials gemäß der Erfindung fast nicht und kommen in der Figur 6 praktisch übereinander zu liegen.

Die geringe Veränderung des erfindungsgemäßen Kohlenstoffmaterials ist auf den hohen Graphitisierungsgrad und das Verschließen der (002) Basalebenen zurückzuführen.

Ein Hinweis auf diesen hohen Graphitisierungsgrad gibt auch die röntgendiffraktometrische Analyse (XRD-Messung) des erfindungsgemäßen Kohlenstoffmaterials mit unterschiedlichen Platinbelegungen von **Figur 8**. Hier ist die relative Intensität Int. (in relativer Einheit) gegen den Beugungswinkelbereich 2 Theta aufgetragen. Es wurden vier Proben mit demselben Kohlenstoffträger aber mit unterschiedlicher Art und Weise der Erzeugung der Platinbelegung analysiert, nämlich:

K1      mittels Platin-Oxalat, 40,32 Gew.-% Pt.

K2      mittels Platin-Ethylamin, 10,13 Gew.-% Pt.

K3      mittels Platin-Oxalat, 8,96 Gew.-% Pt.

K4      mittels Platin-Oxalat, 9,03 Gew.-% Pt.

Die Gewichtsangabe bezieht sich jeweils auf das Gesamtgewicht des Trägerkatalysators.

Die Beugungslinie der (002)-Grafitebene bei einem Winkel von etwa 26,3 Grad ist mit C1 gekennzeichnet. Sie ist bei allen Proben ähnlich. Aus ihrer Lage relativ zur entsprechenden Beugungslinie bei hochgeordnetem 2H-Graphit ist der Graphitisierungsgrad ablesbar. Dieser ist durch einen Basalebenenabstand von weniger als 338 pm gekennzeichnet. Die Breite der Beugungslinie C1 ist ein Maß für die Kristallitgröße. Je geringer die Breite ist, umso größer ist die mittlere Kristallitgrö-ße.

Die charakteristischen Beugungslinien für Platinkristalle sind mit Pt1, Pt2, Pt3 und Pt4 bezeichnet. Es ist erkennbar, dass nur Probe K2 Beugungsmaxima bei diesen charakteristischen Beugungslinien aufweist, nicht jedoch die Proben K1, K3 und K4. Dies ist ein Beleg dafür, dass die Platinkristalle bei den unter Einsatz von Platin-Oxalat belegten Trägerkatalysatoren röntgenographisch amorph sind, also Partikelgrößen im Bereich von 1 bis 3 nm haben. Demgegenüber sind bei der Probe K2, bei der die Platinbelegung unter Einsatz von Platin-Ethylamin erfolgte, die erhaltenen Platin-Kristalle so groß, dass sie die charakteristischen Beugungslinien für Platinkristalle zeigen.

## Patentansprüche

1.  Verfahren zur Herstellung eines mit Metall-Nanopartikeln belegten, porösen graphitisierten Kohlenstoffmaterials, insbesondere für elektrochemische Anwendungen, umfassend folgende Verfahrensschritte:

    (a) Bereitstellen eines porösen Templatgerüsts aus anorganischem Templat-Werkstoff,
    (b) Infiltrieren des porösen Templatgerüsts mit einer Kohlenstoff-Vorstufe,
    (c) Thermische Behandlung der Kohlenstoff-Vorstufe, umfassend ein Carbonisieren der Kohlenstoff-Vorstufe bei einer Carbonisierungs-Temperatur,
    (d) Entfernen des Templatgerüsts unter Bildung von templatmaterialfreiem, partikelförmigem porösem Kohlenstoffmaterial, und
    (e) Belegen des templatmaterialfreien, partikelförmigen porösen Kohlenstoffmaterials mit einer katalytisch wirksamen Substanz,

    **dadurch gekennzeichnet,**

    • **dass** das nach Verfahrensschritt (d) erhaltene, templatmaterialfreie, partikelförmige poröse Kohlenstoffmaterial bei einer Graphitisierungs-Temperatur, die im Bereich von bis 1.400-2.500°C liegt und die höher ist als die Carbonisierungs-Temperatur, zu graphitisiertem, partikelförmigem, porösem Kohlenstoffmaterial graphitisiert wird,
    • **dass** das graphitisierte Kohlenstoffmaterial einer Aktivierungsbehandlung in oxidierend wirkender Atmosphäre unterzogen wird,
    • wobei das graphitisierte Kohlenstoffmaterial eine hierarchische Porenstruktur mit einem - mittels Quecksilber-Porosimetermessung ermittelten - Porenvolumen von mindestens 0,5 $cm^3$/g aufweist, wobei mindestens 75% des Porenvolumens auf Makroporen im Größenbereich von 100 bis 5.000 nm entfallen, und
    • **dass** das Bereitstellen des Templatgerüsts in Verfahrensschritt (a) eine Maßnahme umfasst, bei der aus einem Ausgangsmaterial durch Flammhydrolyse oder Pyrolyse poröse Partikel aus dem anorganischen Templat-Werkstoff erzeugt, und diese aus der Gasphase unter Bildung des Templatgerüst abgeschieden werden.

2. Verfahren nach Anspruch 1, **dadurch gekennzeichnet, dass** die Graphitisierungs-Temperatur im Temperaturbereich von 2.300-2.500°C liegt.

3. Verfahren nach einem der vorhergehenden Ansprüche, **dadurch gekennzeichnet, dass** die Aktivierungsbehandlung des graphitisierten Kohlenstoffmaterials in einer Sauerstoff-haltigen Atmosphäre, vorzugsweise an Luft, und bei erhöhter Temperatur zwischen 400 und 500 °C erfolgt

4. Verfahren nach einem der vorhergehenden Ansprüche, **dadurch gekennzeichnet, dass** das nach Entfernen des Templatgerüsts in Verfahrensschritt (d) erhaltene poröse Kohlenstoffmaterial eine spezifische Oberfläche (BET) im Bereich von 20 $m^2/g$ bis 500 $m^2/g$ aufweist.

5. Verfahren nach einem der vorhergehenden Ansprüche, **dadurch gekennzeichnet, dass** ein partikelförmiges poröses Kohlenstoffmaterial mit einer Partikelgröße von weniger als 20 $\mu$m, vorzugsweise weniger als 10 $\mu$m graphitisiert wird, wobei zum Einstellen der Partikelgröße bevorzugt das poröse Kohlenstoffmaterial vor oder nach dem Entfernen des Templatgerüsts zerkleinert wird.

6. Verfahren nach einem der vorhergehenden Ansprüche, **dadurch gekennzeichnet, dass** als katalytisch wirksame Substanz ein Edelmetall, ausgewählt aus der Platingruppe, vorzugsweise Platin, oder eine Legierung des Edelmetalls eingesetzt wird.

7. Verfahren nach Anspruch 6, **dadurch gekennzeichnet, dass** das Belegen mit katalytisch wirksamer Substanz in Verfahrensschritt (e) eine Maßnahme umfasst, bei der eine Lösung einer Edelmetall-Verbindung, vorzugsweise Edelmetall-Oxalat, auf dem Kohlenstoffmaterial aufgebracht und unter Bildung einer Ablagerung katalytisch wirkender Partikel auf dem porösen Kohlenstoffmaterial einer Zersetzungsbehandlung unterzogen wird.

8. Verfahren nach Anspruch 7, **dadurch gekennzeichnet, dass** die Zersetzungsbehandlung bei einer Temperatur von weniger als 300°C erfolgt.

9. Verfahren nach einem der vorhergehenden Ansprüche, **dadurch gekennzeichnet, dass** beim Belegen mit katalytisch wirksamer Substanz in Verfahrensschritt (e) Edelmetall-Nanopartikel mit einer mittleren Größe zwischen 1-10 nm, bevorzugt weniger als 8 nm, weiter bevorzugt weniger als 5 nm und ganz besonders bevorzugt zwischen 1-3 nm erzeugt werden.

10. Trägerkatalysator enthaltend einen elektrisch leitfähigen Träger aus porösem graphitisiertem Kohlenstoffmaterial, beschichtet mit einer katalytisch wirksamen Substanz, **dadurch gekennzeichnet, dass** das poröse graphitisierte Kohlenstoffmaterial aus polykristallinem Kohlenstoff besteht, der einen Graphitisierungsgrad aufweist, der durch einen Basalebenenabstand d002 von weniger als 0,338 nm definiert ist, und eine hierarchischer Porenstuktur mit einem - mittels Quecksilberporosimetrie ermittelten - Porenvolumen von mindestens 0,5 $cm^3/g$ aufweist, wobei mindestens 75% des Porenvolumens auf Makroporen im Größenbereich von 100 bis 5.000 nm entfallen.

11. Trägerkatalysator nach Anspruch 10, **dadurch gekennzeichnet, dass** das poröse graphitisierte Kohlenstoffmaterial eine spezifische Oberfläche (BET) im Bereich von 5 $m^2/g$ bis 200 $m^2/g$ aufweist.

12. Trägerkatalysator nach Anspruch10 oder 11, **dadurch gekennzeichnet, dass** das poröse graphitisierte Kohlenstoffmaterial in Form von Partikeln mit einer mittleren Partikelgröße von weniger als 20 $\mu$m vorliegt.

13. Trägerkatalysator nach einem der Ansprüche10 bis 12, **dadurch gekennzeichnet, dass** das poröse graphitisierte Kohlenstoffmaterial Kristallite mit Abmessungen - ermittelt nach der Methode von Scherrer - von mindestens 20 nm, vorzugsweise mindestens 50 nm, besonders bevorzugt mindestens 70 nm aufweist.

14. Trägerkatalysator nach einem der Ansprüche10 bis 13, **dadurch gekennzeichnet, dass** als katalytisch wirksame Substanz ein Edelmetall, ausgewählt aus der Platingruppe, vorzugsweise Platin, oder eine Legierung des Edelmetalls vorgesehen ist und dass das Edelmetall in Form von Edelmetall-Nanopartikeln mit einer mittleren Größe zwischen 1-10 nm, bevorzugt weniger als 8 nm, weiter bevorzugt von weniger als 5 nm und ganz besonders bevorzugt zwischen 1-3 nm vorliegt.

15. Trägerkatalysator nach einem der Ansprüche10 bis 14, **dadurch gekennzeichnet, dass** die Edelmetall-Partikel bevorzugt im Bereich von Kristallit-Korngrenzen abgelagert sind.

**Claims**

1. A method for producing a porous graphitized carbon material coated with metal nanoparticles, in particular for electrochemical applications, comprising the following method steps:

   (a) providing a porous template framework made of an inorganic template material,
   (b) infiltrating the porous template framework with a carbon precursor,
   (c) thermal treatment of the carbon precursor, comprising carbonizing the carbon precursor at a carbonization temperature,
   (d) removing the template framework to form template material-free particulate porous carbon material, and
   (e) covering the template material-free particulate porous carbon material with a catalytically active substance,

   **characterized in that**

   • the template material-free particulate porous carbon material obtained according to method step (d) is graphitized to form graphitized particulate porous carbon material at a graphitization temperature that is in the range from 1,400 to 2,500 °C and that is higher than the carbonization temperature,
   • the graphitized carbon material is subjected to an activation treatment in an oxidizing atmosphere,
   • wherein the graphitized carbon material having a hierarchical pore structure having a pore volume of at least 0.5 cm$^3$/g determined by means of mercury porosimeter measurement, at least 75% of the pore volume being accounted for by macropores in the size range of 100 to 5000 nm, and
   • **in that** the provision of the template framework in method step (a) comprises a measure in which porous particles from the inorganic template material are produced from a starting material by means of flame hydrolysis or pyrolysis, and these particles are deposited from the gas phase to form the template framework.

2. The method according to claim 1, **characterized in that** the graphitization temperature is in the temperature range of 2,300-2,500 °C.

3. The method according to either of the preceding claims, **characterized in that** the activation treatment of the graphitized carbon material is carried out in an oxygen-containing atmosphere, preferably in air, and at an elevated temperature between 400 and 500 °C.

4. The method according to any of the preceding claims, **characterized in that** the porous carbon material obtained after removal of the template framework in method step (d) has a specific surface area (BET) in the range from 20 m$^2$/g to 500 m$^2$/g.

5. The method according to any of the preceding claims, **characterized in that** a particulate porous carbon material having a particle size less than 20 $\mu$m, preferably less than 10 $\mu$m, is graphitized, the porous carbon material preferably being comminuted before or after the removal of the template framework to adjust the particle size.

6. The method according to any of the preceding claims, **characterized in that** a noble metal selected from the platinum group, preferably platinum, or an alloy of the noble metal is used as catalytically active substance.

7. The method according to claim 6, **characterized in that** the covering with a catalytically active substance in method step (e) comprises a measure in which a solution of a noble metal compound, preferably a noble metal oxalate, is applied to the carbon material and subjected to a decomposition treatment to form a deposition of catalytically active particles on the porous carbon material.

8. The method according to claim 7, **characterized in that** the decomposition treatment is carried out at a temperature of less than 300 °C.

9. The method according to any of the preceding claims, **characterized in that**, during coating with a catalytically active substance in method step (e), noble metal nanoparticles having a mean size of between 1 and 10 nm, preferably less than 8 nm, more preferably less than 5 nm, and very particularly preferably between 1 and 3 nm are produced.

10. A supported catalyst containing an electrically conductive support made of porous graphitized carbon material coated with a catalytically active substance, **characterized in that** the porous graphitized carbon material consists of polycrystalline carbon having a degree of graphitization defined by a basal plane distance d002 of less than 0.338 nm, and has a hierarchical pore structure having a pore volume of at least 0.5 cm$^3$/g determined by means of mercury porosimetry, at least 75% of the pore volume being accounted for by macropores in the size range of 100 to 5,000 nm.

11. The supported catalyst according to claim 10, **characterized in that** the porous graphitized carbon material has a specific surface area (BET) in the range from 5 m$^2$/g to 200 m$^2$/g.

12. The supported catalyst according to either claim 10 or claim 11, **characterized in that** the porous graphitized carbon material is present in the form of particles having a mean particle size of less than 20 μm.

13. The supported catalyst according to any of claims 10 to 12, **characterized in that** the porous graphitized carbon material has crystallites having dimensions, determined according to the method of Scherrer, of at least 20 nm, preferably at least 50 nm, particularly preferably at least 70 nm.

14. The supported catalyst according to any of claims 10 to 13, **characterized in that** a noble metal selected from the platinum group, preferably platinum, or an alloy of the noble metal is provided as catalytically active substance, and **in that** the noble metal is present in the form of noble metal nanoparticles having a mean size between 1 and 10 nm, preferably less than 8 nm, more preferably less than 5 nm, and very particularly preferably between 1 and 3 nm.

15. The supported catalyst according to any of claims 10 to 14, **characterized in that** the noble metal particles are preferably deposited in the region of crystallite grain boundaries.

## Revendications

1. Procédé de fabrication d'un matériau carboné poreux, graphitisé et recouvert de nanoparticules de métal, en particulier pour des applications électrochimiques, comprenant les étapes de procédé suivantes :

(a) fourniture d'une structure de matrice poreuse en un matériau de matrice inorganique,
(b) infiltration de la structure de matrice poreuse avec un précurseur de carbone,
(c) traitement thermique du précurseur de carbone, comprenant une carbonisation du précurseur de carbone à une température de carbonisation,
(d) retrait de la structure de matrice pour former un matériau carboné poreux, particulaire et exempt de matériau de matrice, et
(e) recouvrement du matériau carboné poreux, particulaire et exempt de matériau de matrice avec une substance à action catalytique,

**caractérisé en ce**

• **que** le matériau carboné poreux, particulaire et exempt de matériau de matrice obtenu après l'étape de procédé (d) est graphitisé, à une température de graphitisation qui se situe dans la plage de 1 400 à 2 500 °C et qui est supérieure à la température de carbonisation, pour former un matériau carboné poreux, particulaire et graphitisé,
• **que** le matériau carboné graphitisé est soumis à un traitement d'activation dans une atmosphère à action oxydante,
• dans lequel le matériau carboné graphitisé présente une structure de pores hiérarchique comportant un volume de pores d'au moins 0,5 cm$^3$/g, déterminé par mesure par porosimétrie au mercure, dans lequel au moins 75 % du volume de pores est constitué de macropores dans la plage de dimensions de 100 à 5 000 nm, et
• **que** la fourniture de la structure de matrice à l'étape de procédé (a) comprend une mesure à laquelle, à partir d'un matériau de base et par hydrolyse à la flamme ou par pyrolyse, des particules poreuses en matériau de matrice inorganique sont produites, et lesdites particules sont déposées à partir de la phase gazeuse pour former la structure de matrice.

2. Procédé selon la revendication 1, **caractérisé en ce que** la température de graphitisation se situe dans la plage de température de 2 300 à 2 500 °C.

3. Procédé selon l'une quelconque des revendications précédentes, **caractérisé en ce que** le traitement d'activation du matériau carboné graphitisé s'effectue dans une atmosphère contenant de l'oxygène, de préférence dans l'air, et à une température élevée comprise entre 400 et 500 °C.

4. Procédé selon l'une quelconque des revendications précédentes, **caractérisé en ce que** le matériau carboné poreux obtenu après le retrait de la structure de matrice à l'étape de procédé (d) présente une surface spécifique (BET) dans la plage de 20 m$^2$/g à 500 m$^2$/g.

5. Procédé selon l'une quelconque des revendications précédentes,
**caractérisé en ce qu'**un matériau carboné poreux et particulaire est graphitisé avec une dimension de particules inférieure à 20 $\mu$m, de préférence inférieure à 10 $\mu$m, dans lequel, pour l'ajustement de la dimension de particules, le matériau carboné poreux est de préférence broyé avant ou après le retrait de la structure de matrice.

6. Procédé selon l'une quelconque des revendications précédentes,
**caractérisé en ce qu'**un métal précieux choisi dans le groupe platine, de préférence le platine, ou un alliage du métal précieux est utilisé comme substance à action catalytique.

7. Procédé selon la revendication 6, **caractérisé en ce que** le recouvrement avec la substance à action catalytique à l'étape de procédé (e) comprend une mesure à laquelle une solution d'un composé de métal précieux, de préférence un oxalate de métal précieux, est appliquée sur le matériau carboné et soumise à un traitement de décomposition pour former un dépôt de particules à action catalytique sur le matériau carboné poreux.

8. Procédé selon la revendication 7, **caractérisé en ce que** le traitement de décomposition s'effectue à une température inférieure à 300 °C.

9. Procédé selon l'une quelconque des revendications précédentes, **caractérisé en ce que**, lors du recouvrement avec la substance à action catalytique à l'étape de procédé (e), des nanoparticules de métal précieux comportant une dimension moyenne comprise entre 1 et 10 nm, de préférence inférieure à 8 nm, de manière davantage préférée inférieure à 5 nm et de manière tout particulièrement préférée comprise entre 1 et 3 nm, sont produites.

10. Catalyseur supporté contenant un support électriquement conducteur en un matériau carboné poreux et graphitisé, revêtu d'une substance à action catalytique, **caractérisé en ce que** le matériau carboné poreux et graphitisé est constitué d'un carbone polycristallin qui présente un degré de graphitisation défini par un espacement de plans basaux d002 inférieur à 0,338 nm et qui présente une structure de pores hiérarchique comportant un volume de pores d'au moins 0,5 cm$^3$/g, déterminé par porosimétrie au mercure, dans lequel au moins 75 % du volume de pores est constitué de macropores dans la plage de dimensions de 100 à 5 000 nm.

11. Catalyseur supporté selon la revendication 10, **caractérisé en ce que** le matériau carboné poreux et graphitisé présente une surface spécifique (BET) dans la plage de 5 m$^2$/g à 200 m$^2$/g.

12. Catalyseur supporté selon la revendication 10 ou 11, **caractérisé en ce que** le matériau carboné poreux et graphitisé se présente sous la forme de particules comportant une dimension de particules moyenne inférieure à 20 $\mu$m.

13. Catalyseur supporté selon l'une des revendications 10 à 12, **caractérisé en ce que** le matériau carboné poreux et graphitisé présente des cristallites comportant des dimensions, déterminées selon la méthode de Scherrer, d'au moins 20 nm, de préférence d'au moins 50 nm, de manière particulièrement préférée d'au moins 70 nm.

14. Catalyseur supporté selon l'une des revendications 10 à 13, **caractérisé en ce qu'**un métal précieux choisi dans le groupe platine, de préférence le platine, ou un alliage du métal précieux est prévu comme substance à action catalytique, et **en ce que** le métal précieux se présente sous la forme de nanoparticules de métal précieux comportant une dimension moyenne comprise entre 1 et 10 nm, de préférence inférieure à 8 nm, de manière davantage préférée inférieure à 5 nm et de manière tout particulièrement préférée comprise entre 1 et 3 nm.

15. Catalyseur supporté selon l'une des revendications 10 à 14, **caractérisé en ce que** les particules de métal précieux sont déposées de préférence dans la zone de joints de grains des cristallites.

**Fig. 1**

**Fig. 2**

**Fig. 3**

**Fig. 4a**          **Fig. 4b**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4551220 A
- US 7687187 B2
- EP 0450849 B1
- US 6967183 B2
- EP 0676050 B1
- US 7144652 B2
- US 7488699 B2
- WO 2013117725 A1
- US 20130209891 A1
- US 6780350 B1

**In der Beschreibung aufgeführte Nicht-Patentliteratur**

- *Nature Materials,* Oktober 2013, vol. 12, 919